# FASCICULE DE BREVET EUROPEEN

(11) **EP 1 654 830 B1**
(45) Date de publication et mention de la délivrance du brevet: **29.11.2006**
(21) Numéro de dépôt: 04786249.5
(22) Date de dépôt: 02.08.2004
(51) Int. Cl.: H04L 12/18

(54) **PROCEDE DE DIFFUSION D'INFORMATION MULTICAST ETENDUE, SYSTEME ET PRODUIT LOGICIEL CORRESPONDANT**
VERFAHREN ZUM AUSSTRAHLEN EXTENSIVER MULTICAST-INFORMATIONEN, SYSTEM UND ENTSPRECHENDES SOFTWARE-PRODUKT
METHOD FOR BROADCASTING EXTENSIVE MULTICAST INFORMATION, SYSTEM AND CORRESPONDING SOFTWARE PRODUCT

(30) Priorité: 12.08.2003 FR 0309873
(43) Date de publication de la demande: 10.05.2006
(73) Titulaire: FRANCE TELECOM, 75015 Paris (FR)
(72) Inventeur: CANTENOT, Noël, F-91120 Palaiseau (FR); BELOEIL, Luc, F-14440 Douvres-la-Délivrance (FR); AUVRAY, Sébastien, F-14000 Caen (FR)
(74) Mandataire: Habasque, Etienne J. Jean-François
(86) Numéro de dépôt international: PCT/FR2004/002074
(87) Numéro de publication internationale: WO 2005/018198

(56) Documents cités:
- US-A1- 2003 012 216
- MEYER D: "Request for Comments 2365: Administratively Scoped IP Multicast" NETWORK WORKING GROUP, [Online] 1 juillet 1998 (1998-07-01), XP002274123 Extrait de l'Internet: URL:http://www.faqs.org/rfcs/rfc2365.html> [extrait le 2004-03-17]

## Description

L'invention concerne un procédé de diffusion d'information Multicast étendue, un système et le ou les produits logiciels correspondants.

A l'heure actuelle, les entreprises ou sociétés industrielles ou commerciales font appel, de manière quasi nécessaire, à l'échange de données et d'informations supportées par ces données, par l'intermédiaire du réseau IP.

De la manière la plus répandue, ces entreprises ou sociétés sont des entités multiétablissements, à un ou plusieurs établissements étant en général associé au moins un site informatique, site WEB, ces sites étant reliés entre eux via un réseau IP. Ces entreprises ou sociétés sont donc en outre des entités multisite.

D'une manière générale, le processus de diffusion d'information Multicast IP permet d'effectuer des diffusions d'information sur chacun des sites précités.

Toutefois, les diffusions précitées sont dites privées, car limitées et effectuées uniquement à destination des utilisateurs de postes de travail fixes ou nomades identifiés comme appartenant au site, mais ne peuvent aucunement être transmises d'un site à l'autre.

Ce type de diffusion est appelé, pour cette raison, diffusion locale au site.

Un rappel des techniques de diffusion Unicast respectivement Multicast sera tout d'abord introduit ci-après, en liaison avec les figures.

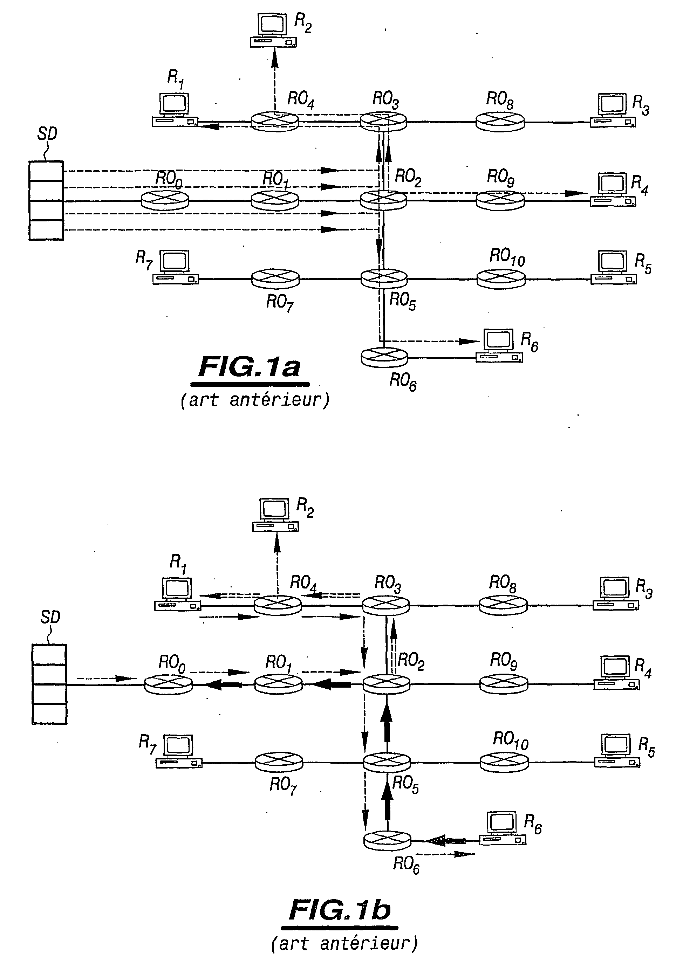

En référence à la figure 1a, la technique de diffusion Unicast utilisée actuellement sur le réseau IP permet d'exécuter des diffusions point à point.

Un serveur de diffusion SD engendre un flux de données vers chacun des postes de travail (récepteurs) R₁ à R₇, dont il a reçu une demande par l'intermédiaire de routeurs RO₀ à RO₁₀.

Plus il y a de récepteurs, plus le serveur SD est sollicité et plus la bande passante réseau est utilisée pour transmettre des données et informations identiques.

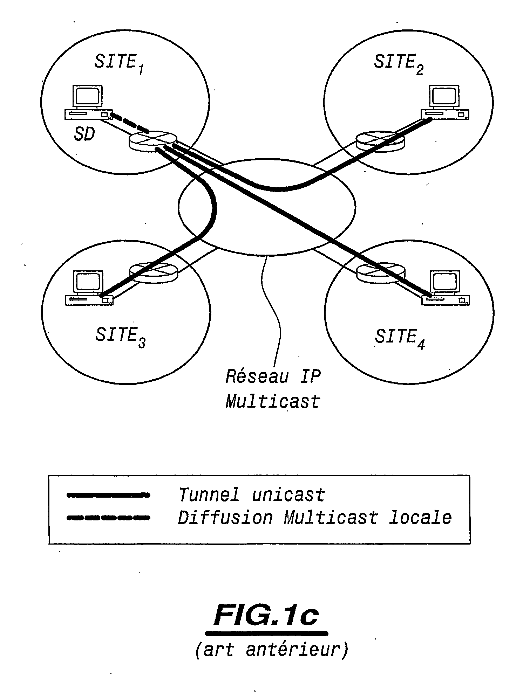

Dans le cas de la technique de diffusion Multicast, au contraire, en référence aux figures 1b et 1c, un récepteur, R₆, désirant avoir accès ou s'abonner à une diffusion Multicast envoie une requête d'accès vers son routeur d'accès RO₆, selon le procédé IGMP (RFC 2236). Le routeur d'accès RO₆ utilise un protocole de routage Multicast, le procédé PIM-SM (RFC 2117) par exemple, pour relayer cette demande jusqu'à un point du réseau (point de commutation ou routeur) qui reçoit déjà cette diffusion, le cas échéant directement jusqu'au routeur d'accès RO₀ de la source de la diffusion, ainsi que représenté figure 1b. Le cheminement de la requête précitée est représenté en flèches en trait plein figure 1b.

Chaque routeur appartenant au cheminement garde en mémoire l'interface logicielle, données-adresses de routage, par laquelle il a reçu une demande d'abonnement à une diffusion déterminée. Lorsque le routeur considéré reçoit les paquets de données IP relatifs à cette diffusion, il les transmet à son routeur voisin par cheminement inverse, grâce à l'interface logicielle mémorisée.

Ainsi les paquets de données IP correspondant à cette diffusion atteignent le récepteur demandeur R₆ par cheminement inverse. Le cheminement inverse est représenté par des flèches en trait pointillé en figure 1b.

Lorsqu'un nouveau récepteur, le récepteur R₁ par exemple ainsi que représenté en figure 1b, veut accéder à cette même diffusion, il envoie sa requête d'accès à son routeur d'accès RO₄. Ce dernier transmet cette demande jusqu'à ce que celle-ci atteigne un routeur exécutant la diffusion demandée, en l'occurrence le routeur RO₂ sur la figure 1b. Le cheminement de cette requête est représenté en flèches en trait mixte sur la figure 1b.

Le routeur le plus aval, dans le sens de la diffusion, atteint par cette requête, qui reçoit déjà les données et informations de la diffusion demandée par le récepteur R₁, stoppe la remontée de cette requête vers la source de diffusion, serveur SD, duplique les paquets de données IP pour transmettre ces derniers également vers le récepteur R₁ grâce à l'interface logicielle mémorisée, par cheminement inverse. Le cheminement de la diffusion complète est représenté en flèches en traits pointillés en figure 1b, le cheminement inverse RO₂ - RO₃ - RO₄- R₁ étant représenté en double flèche en trait pointillé, bien qu'appartenant à la même diffusion Multicast que celle demandée par le récepteur R₆. Il en va de même pour tout autre récepteur R₂ à R₅ susceptible de solliciter la même diffusion.

En conséquence, grâce à la technique de diffusion Multicast IP, on comprend que le serveur SD n'envoie qu'une seule fois les données support de l'information constitutives de la diffusion. Ces données sont dupliquées par les routeurs du réseau de façon dynamique, pour atteindre les récepteurs habilités qui en ont fait la demande. L'ensemble des chemins ou cheminements suivis par les paquets de données IP de la diffusion, du serveur SD vers ces récepteurs habilités, forme un arbre de diffusion d'information Multicast dont la racine est la source de diffusion, serveur SD ou routeur racine RO₀, les divers cheminements constituant les branches et les récepteurs de terminaison constituant les feuilles. On comprend, en particulier, que, suite à la demande d'accès des récepteurs R₆ et R₁, dans le cas d'une demande d'accès du récepteur R₄ la branche RO₂ - RO₉ et la feuille récepteur R₄ sont rajoutées alors que dans le cas d'une demande d'accès du récepteur R₂, seule la feuille récepteur R₂ est rajoutée.

En ce qui concerne l'adressage Multicast IP, la technique de diffusion Multicast introduit le concept d'adresse Multicast. Un paquet de données IP faisant partie d'une diffusion Multicast possède une adresse IP destination, dite adresse Multicast. Tous les paquets de données support d'information appartenant à la même diffusion portent la même adresse Multicast destination. Alors qu'une adresse IP Unicast permet d'identifier une et une seule machine ou poste de travail récepteur, une adresse IP Multicast sert à identifier un ensemble ou groupe de machines, l'ensemble de machines habilitées à l'accès à cette diffusion. Une adresse Multicast est donc toujours une adresse destination et n'a aucun sens en tant qu'adresse source. Dans ce but, une partie des codes d'adresse IP est réservée à l'attribution des adresses Multicast.

De manière spécifique, la norme RFC 2365 (Administratively Scoped IP Multicast) définit une façon d'attribuer à certaines adresses Multicast une limite administrative à la diffusion que ces adresses représentent.

En fonction de la valeur de l'adresse Multicast attribuée à une diffusion, cette diffusion est en conséquence destinée à être limitée :
- à un site ("site-local scope") ;
- à une organisation ("organization-local scope") ;
- à l'ensemble de l'Internet ("global scope").

Les données support d'une diffusion d'information limitée à un site, "site-local scope", ne doivent pas franchir les limites administratives qui lui sont imposées par son adresse Multicast. Dans ce but, chaque entité administrative est responsable de la configuration de ses routeurs afin d'assurer la traduction, en termes de configuration réseau sur ce site, de règles administratives précitées et le respect de ces dernières.

Les possibilités offertes par le concept de diffusion Multicast précité en vue d'assurer la diffusion de données sur les différents sites d'une entreprise ou entité multisite apparaissent à l'heure actuelle sensiblement limitées.

Si, en référence à la figure 1c, on suppose une entité multisite implantée sur quatre sites distincts, site 1, site 2, site 3 et site 4, le site 1 comportant par exemple un serveur de diffusion Multicast SD, une telle diffusion, selon un mode "site-local scope", est locale au site 1. En conséquence, les paquets de données IP support de l'information de cette diffusion ne sont pas émis à l'extérieur du site. Ces paquets de données ne traversent donc pas le réseau d'interconnexion et ne peuvent pas être reçus par les utilisateurs des autres sites, site 2, site 3, site 4.

Une possibilité peut consister, éventuellement, en l'implémentation d'un tunnel IP Unicast entre le site site 1, site d'origine, et chacun des utilisateurs, notamment les utilisateurs nomades connectés sur les autres sites, site 2, site 3 et site 4. Le document US 2003/0012216 A1 décrit un tel procédé.

Bien qu'une signalisation appropriée soit susceptible de permettre l'acheminement de requêtes d'accès à la diffusion, respectivement des paquets de données support de l'information de cette diffusion par cheminement inverse par l'intermédiaire de chacun des tunnels IP Unicast, les inconvénients engendrés par une telle solution sont les suivants :
- perte de tous les avantages liés à la diffusion Multicast sur le réseau d'interconnexion des sites, du fait justement de la création de tunnels IP Unicast de substitution ;
- problème de mise à l'échelle : plus il y a d'utilisateurs demandeurs plus il est nécessaire de créer de tunnels Unicast, plus, en conséquence, le routeur d'accès RO₀ du site site 1 doit dupliquer les paquets IP supports de l'information de la diffusion et plus la bande passante sur le réseau d'interconnexion est utilisée pour transmettre plusieurs fois les mêmes paquets de données. Un tel mode opératoire s'analyse donc, du point de vue de la consommation de la bande passante du réseau de connexion, comme une simple multiplication de connexions point à point, ce qui limite en conséquence le nombre d'utilisateurs demandeurs simultanés sur l'ensemble des sites de l'entité multisite.

La présente invention a pour objet de remédier aux inconvénients des possibilités directement issues de la diffusion Multicast classique et de la connexion par tunnel IP Unicast, par la prise en compte des possibilités intrinsèques de la diffusion Multicast sur le réseau d'interconnexion des sites multiples d'une entité ou entreprise multisite, afin de permettre de diffuser les diffusions locales à tout site jusqu'aux utilisateurs demandeurs, tels que les utilisateurs nomades appartenant à ce site en visite sur d'autres sites de l'entité multisite, tout en évitant la création de tunnels IP Unicast multiples.

Un autre objet de la présente invention est, en outre, d'éviter toute duplication des paquets de données support de l'information de la diffusion proportionnellement au nombre de tunnels IP Unicast ou d'utilisateurs demandeurs de cette diffusion sur les sites constitutifs de cette entité multisite.

La présente invention a enfin pour objet d'assurer une optimisation des ressources du réseau d'interconnexion, du fait de l'absence de duplication précitée, le service d'accès à la diffusion locale à un site d'origine restant toutefois opérationnel quel que soit le nombre d'utilisateurs demandeurs, tel qu'un des utilisateurs nomades visitant les sites distincts, autres que le site d'origine, constitutifs de l'entité multisite.

Les objets précédemment cités sont atteints, grâce à la mise en oeuvre d'un procédé de diffusion d'information Multicast étendue, à partir d'une diffusion d'information Multicast, d'un système et de produits logiciels correspondants, la notion de diffusion d'information Multicast étendue correspondant à celle d'une diffusion Multicast globale, limitée toutefois à l'ensemble des sites constitutifs d'une entreprise ou entité multisite.

Le procédé de diffusion d'information Multicast étendue, à partir d'une diffusion Multicast locale sur un site d'origine à un utilisateur de poste de travail nomade appartenant à ce site d'origine, vers au moins un site distinct hébergeant ce poste de travail nomade et relié à ce site d'origine par le réseau IP, cette diffusion d'information Multicast locale étant engendrée à partir d'une source de diffusion d'information implantée à une première adresse de diffusion d'information Multicast locale dans ce site d'origine, conforme à l'objet de la présente invention, est remarquable en ce qu'il consiste, suite à l'interconnexion de ce poste de travail nomade au réseau IP sur ce site distinct, à transmettre, du poste de travail nomade vers le site d'origine, un message de requête de diffusion d'information Multicast IP étendue, ce message de requête contenant au moins cette première adresse de diffusion Multicast locale et un code d'identification de ce poste de travail nomade, et, suite à l'identification dudit poste de travail nomade par ce site d'origine, transmettre de ce site d'origine vers ce poste de travail nomade un message d'offre d'accès à une diffusion d'information Multicast globale, ce message d'offre d'accès comprenant au moins une deuxième adresse de diffusion d'information Multicast globale, dont la source de diffusion est identifiée dans ce site d'origine, et, suite à la réception de ce message d'offre d'accès par ce poste de travail nomade, transmettre de ce poste de travail nomade vers le site d'origine, par l'intermédiaire du réseau IP, un message d'acceptation d'offre d'accès aux informations en diffusion à cette deuxième adresse de diffusion d'information Multicast globale, et, au niveau du site d'origine, transférer les informations à diffuser de la première à la deuxième adresse, et transmettre par diffusion Multicast globale les informations à diffuser sous la deuxième adresse.

Ceci permet au poste de travail nomade interconnecté sur le site distinct de recevoir, sur ce site distinct, les informations en diffusion sous la première adresse de diffusion locale, diffusées sous la deuxième adresse de diffusion globale.

Le système de diffusion Multicast d'information étendue, à partir d'une diffusion Multicast locale d'un site d'origine à un utilisateur de poste de travail nomade appartenant à ce site d'origine, vers au moins un site distinct hébergeant ce poste de travail nomade et relié à ce site d'origine par le réseau IP, la diffusion d'information Multicast locale étant engendrée, à partir d'une source de diffusion d'information implantée à une première adresse de diffusion Multicast locale dans ce site d'origine, conforme à l'objet de la présente invention, est remarquable en ce qu'il comporte au moins, au niveau de ce site d'origine, un module de réception d'un message de requête de diffusion d'information Multicast IP étendue, émis par ce poste de travail nomade à partir de ce site distinct, ce message de requête contenant au moins cette première adresse de diffusion d'information Multicast locale et un code d'identification de ce poste de travail nomade, ce module de réception permettant d'assurer l'identification de ce poste de travail nomade par le site d'origine, un module de transmission, du site d'origine vers le poste de travail nomade, d'un message d'offre d'accès à une diffusion d'information Multicast globale, ce message d'offre d'accès comprenant au moins une deuxième adresse de diffusion d'information Multicast globale, dont la source de diffusion est identifiée dans le site d'origine, un module de réception d'un message d'acceptation d'offre d'accès aux informations en diffusion à cette deuxième adresse de diffusion d'information Multicast globale émis par ce poste de travail nomade, un module de transfert des informations à diffuser de la première à la deuxième adresse de diffusion et un module de transmission par diffusion d'information Multicast globale des informations à diffuser sous la deuxième adresse.

L'invention est en outre relative à un poste de travail nomade équipé pour la mise en oeuvre du procédé de diffusion d'information Multicast étendue d'une diffusion d'information Multicast locale d'un site d'origine, auquel appartient ce poste de travail nomade, vers au moins un site distinct hébergeant ce poste de travail nomade et relié à ce site d'origine par le réseau IP, à partir d'une source de diffusion d'information implantée à une première adresse de diffusion d'information Multicast locale dans ce site d'origine. Ce poste de travail nomade est remarquable en ce qu'il comporte au moins, mémorisé en mémoire de masse de ce dernier, un module logiciel de création et de transmission d'un message de requête de diffusion d'information Multicast IP étendue, ce message de requête contenant au moins une première adresse de diffusion d'information Multicast et un code d'identification de ce poste de travail nomade, un module logiciel de réception et de lecture d'un message d'offre d'accès à une diffusion d'information Multicast globale, ce message d'offre d'accès comprenant au moins une deuxième adresse de diffusion d'information Multicast globale, dont la source de diffusion est identifiée dans le site d'origine et un module logiciel de création et de transmission vers ce site d'origine par l'intermédiaire du réseau IP, d'un message d'acceptation d'offre d'accès aux informations en diffusion à cette deuxième adresse de diffusion d'information Multicast globale.

Le procédé et le système de diffusion d'information Multicast étendue objets de la présente invention trouvent application à la gestion et au contrôle d'accès à des diffusions d'information Multicast locale et globale entre les différents sites d'établissements ou entreprise multisite interconnectés par le réseau IP.

Ils seront mieux compris à la lecture de la description et à l'observation des dessins ci-après, dans lesquels, outre les figures 1a à 1c relatives à l'art antérieur des techniques de diffusion d'information Unicast et Multicast,
- la figure 2a représente, à titre illustratif, un organigramme des étapes essentielles de mise en oeuvre du procédé de diffusion d'information Multicast étendue conforme à l'objet de la présente invention ;
- la figure 2b représente, à titre purement illustratif, un mode de mise en oeuvre spécifique non limitatif de l'étape de transfert des informations à diffuser de la première adresse de diffusion locale à la deuxième adresse de diffusion globale ;
- la figure 2c représente, à titre purement illustratif, un mode de mise en oeuvre préférentiel non limitatif du procédé objet de la présente invention pour un nombre de messages de requête de diffusion d'information Multicast IP étendue supérieur à un et relatifs à une même diffusion d'information Multicast locale d'un même site d'origine ;
- les figures 3a à 3c représentent à titre purement illustratif un exemple de la structure des messages de requête de diffusion d'information, d'offre d'accès à une diffusion d'information et d'acceptation d'offre d'accès Multicast étendue respectivement ;
- les figures 4a, 4b et 4c représentent, à titre purement illustratif, un système de diffusion d'information Multicast étendue, conforme à l'objet de la présente invention, selon une pluralité de situations successives correspondant à l'envoi de messages successifs de requête de diffusion d'information Multicast étendue à partir d'un ou plusieurs postes de travail nomades à partir de différents sites d'une entreprise multisite ;
- la figure 5 représente, à titre illustratif, un exemple de mise en oeuvre d'un poste de travail nomade selon un mode de réalisation non limitatif.

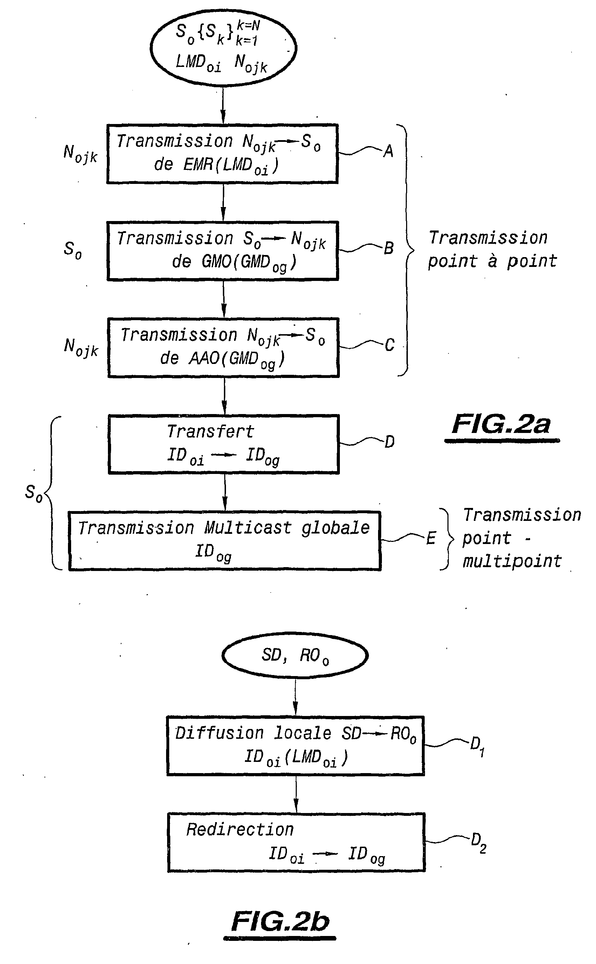

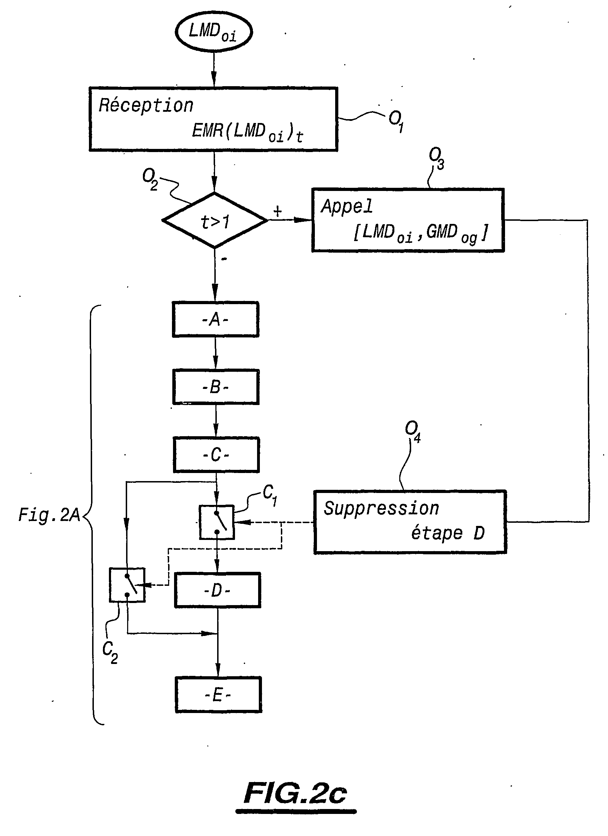

Le procédé de diffusion d'information Multicast étendue, à partir d'une diffusion d'information Multicast locale sur un site d'origine à un utilisateur de poste de travail nomade appartenant à ce site d'origine, vers au moins un site distinct hébergeant ce poste de travail nomade et relié à ce site d'origine par le réseau IP, conforme à l'objet de la présente invention, sera maintenant décrit en liaison avec la figure 2a et les figures suivantes.

D'une manière générale, on rappelle que la diffusion d'information Multicast locale notée LMDₒᵢ est engendrée à partir d'une source de diffusion d'information SD destinée à une première adresse de diffusion d'information Multicast locale dans ce site d'origine.

En référence à la figure 2a, la diffusion d'information Multicast locale est désignée LMDₒᵢ où les références d'adresses 0 et i représentent la première adresse de diffusion d'information Multicast locale dans ce site d'origine, la référence 0 désignant l'adresse du site d'origine S₀ et la référence i désignant l'adresse de la diffusion considérée d'information Multicast locale dans le site d'origine précité. La diffusion d'information Multicast locale peut être assimilée à la première adresse de diffusion.

On considère en outre un ensemble de sites distincts {Sₖ}, k=1 à k=N, le site d'origine S₀ et chacun des sites Sₖ constituant l'entité ou entreprise multisite précédemment mentionnée dans la description.

Enfin, on considère un poste de travail nomade noté N₀ⱼₖ, l'indice 0 indiquant une référence d'appartenance de ce poste nomade au site d'origine S₀, la référence j dénotant une référence ou code d'identification du poste de travail nomade considéré et la référence k dénotant la connexion du poste de travail nomade considéré sur le site distinct Sₖ hébergeant ce dernier et la liaison du poste de travail nomade considéré au site d'origine par l'intermédiaire du réseau IP.

En référence à la figure 2a, le procédé objet de l'invention consiste par l'intermédiaire de l'interconnexion du poste de travail nomade au réseau IP à transmettre, dans une étape A, du poste de travail nomade N₀ⱼₖ vers le site d'origine S₀ un message de requête de diffusion d'information Multicast étendue, ce message de requête étant noté EMR (LMD₀ᵢ).

Ainsi qu'indiqué à l'étape A de la figure 2a, le message de requête précité contient au moins la première adresse de diffusion d'information Multicast locale LMD₀ᵢ ainsi qu'un code d'identification du poste de travail nomade à partir en particulier des indices 0 et références j et k du poste de travail nomade considéré N₀ⱼₖ.

Suite à l'identification du poste de travail nomade par le site d'origine à partir des informations contenues dans le message de requête, le procédé objet de l'invention consiste, en une étape B, à transmettre du site d'origine S₀ vers le poste de travail nomade N₀ⱼₖ un message d'offre d'accès à une diffusion d'information Multicast globale, ce message d'offre d'accès étant noté GMO (GMD_{0g}) sur la figure 2a. Le message d'offre d'accès précité comprend au moins une deuxième adresse de diffusion d'information Multicast globale GMD_{0g} dont la source de diffusion est identifiée dans le site d'origine.

En référence à la figure 2a et à l'étape B de celle-ci, on comprend que la deuxième adresse de diffusion d'information Multicast globale GMD_{0g} comporte la référence à l'indice 0 relative au site d'origine et la référence g à une adresse de diffusion Multicast globale telle que définie de manière spécifique selon la norme RFC2365 précédemment mentionnée dans la description.

Suite à la réception du message d'offre d'accès GMO (GMD_{0g}) par le poste de travail nomade N₀ⱼₖ, le procédé objet de l'invention consiste ensuite en une étape C à transmettre du poste de travail nomade précité vers le site d'origine S₀ par l'intermédiaire du réseau IP un message d'acceptation d'offre d'accès aux informations en diffusion à la deuxième adresse de diffusion d'information Multicast globale.

A l'étape C de la figure 2A, le message d'acceptation de l'offre d'accès est noté AAO (GMD_{0g}).

Après réception du message d'acceptation d'offre d'accès AAO (GMD_{0g}) au niveau du site d'origine S₀, le procédé objet de l'invention comprend une étape D consistant à transférer des informations à diffuser, mémorisées à la première adresse de diffusion et notées pour cette raison ID₀ᵢ à la deuxième adresse de diffusion. Les informations mémorisées sous la deuxième adresse de diffusion étant notées ID_{0g}.

Par cette simple opération, les informations diffusées selon une diffusion d'informations Multicast locale sur le site d'origine S₀ peuvent alors être diffusées selon une diffusion d'information Multicast étendue par l'intermédiaire de l'étape E suivante représentée en figure 2A.

L'étape E précitée consiste alors à transmettre par diffusion Multicast globale les informations à diffuser sous la deuxième adresse ID_{0g}. Ceci permet au poste de travail nomade N₀ⱼₖ interconnecté sur le site distinct de recevoir sur le site distinct précité Sₖ des informations en diffusion sous la première adresse de diffusion locale diffusées alors sous la deuxième adresse de diffusion globale.

En référence à la même figure 2a, on indique que les étapes A, B et C représentées sur cette dernière, relatives à la transmission entre le poste de travail nomade N₀ⱼₖ et le site d'origine S₀ du message de requête de diffusion Multicast IP étendue EMR (LMD₀ᵢ), du message d'offre d'accès à une diffusion Multicast globale GMO (GMD_{0g}) et du message d'acceptation d'offre d'accès AAO (GMD_{0g}) sont exécutées en mode point à point.

L'exécution de ce mode de transmission pour les étapes précitées est rendue possible grâce à la communication des adresses respectives 0 du site d'origine respectivement k du site distinct considéré, l'indice j ou référence d'adresse du poste de travail nomade pouvant consister alors en un code d'identification de ce dernier.

Au contraire et selon un aspect remarquable du procédé objet de la présente invention, l'étape E de transmission Multicast globale est effectuée en mode point-multipoint.

On comprend, dans ces conditions, que le processus de transmission des informations diffusées sous la deuxième adresse, transmission Multicast globale à l'étape E, est alors comparable à celui décrit en liaison avec la figure 1b précédemment décrite dans la description mais que, toutefois, la transmission des informations diffusées sous la deuxième adresse de diffusion Multicast globale ID_{0g} est effectuée non plus localement sur le seul site d'origine mais également sur le ou les sites distincts de l'entité multi-sites, ainsi qu'il sera décrit de manière plus détaillée ultérieurement dans la description.

Un mode de mise en oeuvre particulier de l'étape D consistant à transférer les informations à diffuser de la première à la deuxième adresse de diffusion sera maintenant décrit en liaison avec la figure 2b.

Le mode de mise en oeuvre précité concerne le cas particulier non limitatif dans lequel le site d'origine S0 comprend un serveur de diffusion SD connecté au réseau IP par l'intermédiaire d'un routeur noté RO₀ par exemple. Ce cas particulier correspond de manière avantageuse à la situation d'une entreprise multisite pour laquelle l'un des sites d'origine S₀ est muni d'un serveur de diffusion SD comportant un nombre important de clients, l'utilisation d'un routeur dans cette situation étant préférable.

En référence à la figure 2b, on indique que l'étape D précitée peut alors comporter une étape D1 de diffusion Multicast locale des informations à diffuser mémorisées à la première adresse LMD₀ᵢ du serveur de diffusion vers le routeur RO₀.

L'étape D1 précitée est suivie d'une étape D2 consistant en une étape de redirection des informations à diffuser ID₀ᵢ par substitution de la deuxième adresse de diffusion Multicast globale GMD_{0g} à la première adresse de diffusion locale LMD₀ᵢ. On comprend en particulier que cette étape de redirection D2 peut consister simplement à allouer aux informations diffusées localement ID₀ᵢ la deuxième adresse de diffusion Multicast globale pour engendrer en fait les données mémorisées à la deuxième adresse de diffusion, notées ID_{0g}.

On comprend, en particulier, que l'étape de redirection précitée peut simplement consister à associer aux données mémorisées support de l'information à diffuser, mémorisées au niveau du routeur RO₀, une structure de données simple comportant la première et la deuxième adresses, la structure de données pouvant consister simplement en une liste comprenant au moins la première et la deuxième adresse précitée ou par toute structure de données équivalente.

Compte tenu du mode opératoire du procédé objet de la présente invention tel que décrit en figure 2a à 2b, on indique que, pour une pluralité de messages de requête de diffusion Multicast étendue, relative à une même première adresse de diffusion Multicast locale, émanant d'une pluralité de stations de travail nomades appartenant au site d'origine et interconnectées chacune au réseau IP sur un site distinct différent, l'étape E consistant à transmettre par diffusion Multicast globale les informations à diffuser sous la deuxième adresse permet alors de créer un arbre de diffusion Multicast globale, dont l'élément racine est constitué par l'un des routeurs communs aux branches de diffusion constitutive de l'arbre de diffusion Multicast globale précité.

Toutefois, un mode de mise en oeuvre spécifique du procédé objet de la présente invention sera maintenant décrit en liaison avec la figure 2c, ce mode de réalisation apparaissant particulièrement avantageux pour assurer une gestion cohérente des types de diffusion d'information Multicast locale respectivement globale et de l'espace mémoire finalement occupé dans ce but, tant au niveau du serveur de diffusion SD que du routeur RO₀.

Selon un mode de mise en oeuvre particulièrement avantageux du procédé objet de l'invention, la deuxième adresse de diffusion Multicast globale GMD_{0g} est maintenue et validée pour une diffusion d'information Multicast locale LMD₀ᵢ à la première adresse de manière permanente. La notion de diffusion d'information permanente s'entend du maintien de l'adresse globale tant qu'il existe des abonnés externes.

Dans ces conditions, on comprend que pour assurer le maintien et la validation permanente de la deuxième adresse de diffusion d'information Multicast globale GMD_{0g}, la structure de données, telle qu'une liste [LMD₀ᵢ, GM_{0g}], est mémorisée et sécurisée de manière permanente au niveau du routeur, la première et la deuxième adresses étant ainsi mises en correspondance biunivoque de manière permanente.

Dans ces conditions, l'étape D consistant à transférer des informations à diffuser de la première à la deuxième adresse de diffusion peut alors être supprimée pour tout message de requête de diffusion Multicast étendue à cette deuxième adresse, ultérieur au premier message de requête de diffusion Multicast IP étendue à la deuxième adresse précitée.

On comprend en particulier que la notion de suppression de l'étape D concerne simplement la suppression du transfert physique des données mémorisées à la première adresse vers la deuxième adresse, ce transfert physique pouvant alors être simplement remplacé par l'appel de la deuxième adresse de diffusion d'information Multicast globale à partir de la structure de données permanentes précédemment mentionnée.

Un organigramme illustratif d'un mode opératoire correspondant est représenté en figure 2c.

En référence à la figure précitée, le mode opératoire précité peut comprendre préalablement à la mise en oeuvre des étapes A, B, C, D et E de la figure 2a une étape O₁ de réception de tout message de requête de diffusion Multicast étendue EMR (LMD₀ᵢ) et de comptage de ces messages, un indice t de comptage étant affecté à chacun de ces messages successifs en une étape O₁. L'étape précitée O₁ est suivie d'une étape O₂ de comparaison d'indice de comptage à la valeur 1.

Sur réponse négative à l'étape de test O₂, le procédé objet de la présente invention tel que représenté en figure 2a est alors conduit sans changement.

Au contraire, sur réponse positive au test O₂, pour tout message de requête de diffusion Multicast étendue à la deuxième adresse, ultérieur au premier message précité, une procédure d'appel de la structure de données permanentes à l'étape O₃ est effectuée pour commander une étape 04 de suppression de l'étape D.

L'étape de suppression peut alors être représentée, ainsi qu'illustré à la figure 2c, par l'appel de commutateurs logiques C₁ et C₂, permettant de supprimer l'appel de l'étape D et, au contraire, d'activer l'appel de l'étape E directement à partir de l'étape C et bien entendu, des données et informations mémorisées à la première adresse redirigées par l'intermédiaire de la structure de données permanente vers la deuxième adresse de diffusion Multicast globale.

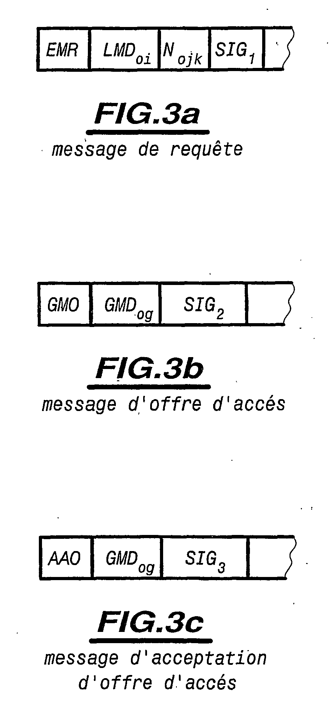

Une description plus détaillée de la structure des messages mis en oeuvre par le procédé objet de la présente invention sera maintenant donnée en liaison avec les figures 3a à 3c.

Sur la figure 3a, on a représenté une structure de données non limitative représentative d'un message de requête de diffusion d'information Multicast étendue.

A titre d'exemple, le message de requête peut comprendre un champ d'entête comprenant un code d'identification de message de requête de diffusion d'information Multicast étendue EMR, un champ comprenant la première adresse de diffusion d'information Multicast locale LMD₀ᵢ et un champ contenant un code d'identification du poste de travail nomade N₀ⱼₖ.

Dès réception du message de requête par le site d'origine, ce dernier est alors en mesure de procéder à partir des références d'adresse 0, j et k du code d'identification du poste de travail nomade à la vérification de l'appartenance de ce dernier au site d'origine d'indice 0, à l'identification en tant que tel du code d'identification représenté par l'indice j et à la mémorisation de l'adresse du site distinct Sₖ.

La figure 3b représente, à titre d'exemple non limitatif, une structure de message d'offre d'accès GMO (GMD_{0g}) à une diffusion d'information Multicast globale émise par le site d'origine S₀ vers le poste de travail nomade précité.

Ainsi que représenté sur la figure 3b, ce message peut comprendre un champ d'entête comportant un code d'identification de messages d'offre d'accès GMO, une deuxième adresse de diffusion d'information Multicast globale GMD_{0g}, les indices 0 et g permettant d'identifier la source de diffusion dans le site d'origine. Dès réception du message d'offre d'accès par le poste de travail nomade, ce dernier est en mesure d'identifier la source de diffusion correspondant aux informations demandées par le message de requête à l'adresse de diffusion d'information Multicast locale sous la deuxième adresse de diffusion d'information Multicast globale.

Enfin, la figure 3c représente de manière non limitative la structure d'un message d'acceptation d'offre d'accès.

Ce message peut comprendre un champ d'entête comportant un code d'identification de message d'acceptation d'offre d'accès AAO, un champ comportant la deuxième adresse de diffusion d'information Multicast globale, la présence de cette information dans le message d'acceptation d'offre d'accès, c'est-à-dire de la deuxième adresse de diffusion d'information Multicast globale, pouvant correspondre à une acceptation effective par l'utilisateur du poste de travail nomade de l'offre d'accès proposé.

En référence aux figures 3a, 3b et 3c, on indique que, de préférence mais de manière non limitative, d'autres champs peuvent être ajoutés aux structures de messages. En particulier, ainsi que représenté sur les figures précitées, un champ de signature de données SIG1, SIG2 et SIG3 peut être ajouté à la structure des messages précités.

De manière spécifique non limitative, on indique que les champs des messages précités peuvent de préférence être transmis de manière chiffrée sans sortir du cadre du procédé objet de la présente invention.

Lorsque les champs de données constitutives de la structure des messages précités sont chiffrés et qu'un champ de données de signature est prévu, les acteurs de la mise en oeuvre du procédé objet de l'invention, c'est-à-dire le site d'origine et le poste de travail nomade concerné, peuvent alors procéder d'une part à l'authentification des données transmises par l'intermédiaire des messages précités par la vérification des signatures et à la transmission sécurisée des données grâce au processus de chiffrement/déchiffrement.

Ces opérations ne seront pas décrites en détails car elles peuvent être mises en oeuvre à partir de tout procédé de chiffrement/déchiffrement signature/vérification connu en tant que tel.

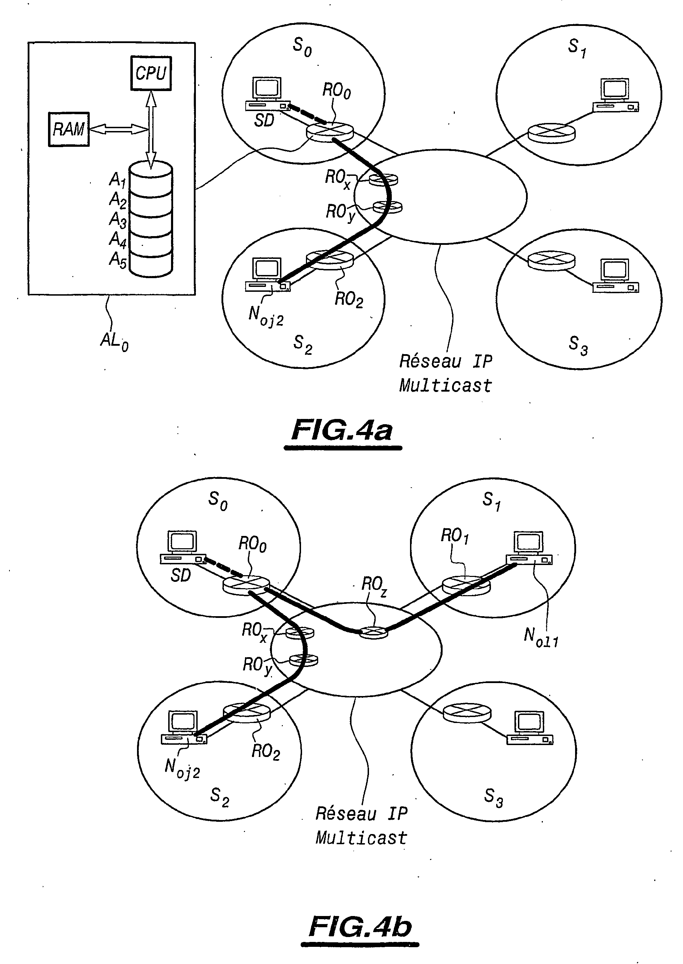

Une description plus détaillée d'un système de diffusion d'information Multicast étendue conforme à l'objet de la présente invention sera maintenant donnée en liaison avec les figures 4a à 4c.

Sur la figure 4a, on a représenté une entité ou entreprise multisite comportant quatre sites, un site d'origine noté S₀ et trois sites distincts notés S₁, S₂ et S₃. A titre d'exemple non limitatif, le site d'origine S₀ est réputé comporter un serveur de diffusion SD connecté à un routeur RO₀ au réseau IP.

De même, à titre d'exemple non limitatif, le poste de travail nomade est référencé N₀ⱼ₂ où 2 représente l'adresse du site S₂ hébergeant ce poste de travail nomade dans l'exemple donné en figure 4a. La diffusion d'information Multicast locale est engendrée par une source de diffusion d'information implantée à une première adresse de diffusion Multicast locale notée LMD₀ᵢ et située, bien entendu, au niveau du serveur de diffusion SD dans le site d'origine S₀. A titre d'exemple non limitatif, le poste de travail nomade N₀ⱼ₂ est réputé connecté sur le site S₂ par l'intermédiaire d'un routeur RO₂ au réseau IP.

Ainsi qu'on l'a représenté en outre sur la figure 4a, le système objet de l'invention comporte au moins au niveau du site d'origine un module A₁ de réception d'un message de requête de diffusion d'information Multicast étendue, le message EMR (LMD₀ᵢ) tel que décrit précédemment dans la description et représenté en figure 3a. Ce message comprend en conséquence le code d'identification du poste de travail nomade, c'est-à-dire le code N₀ⱼₖ représenté sur la figure 3a précitée.

Le module de réception du message de requête de diffusion EMR (LMD₀ᵢ) permet d'assurer l'identification du poste de travail nomade par le site d'origine. On comprend en particulier que, dès la réception du message de requête précité, le site d'origine, à partir du champ de données contenant le code d'identification du poste de travail nomade N₀ⱼₖ permet, bien entendu, d'identifier par discrimination des indices ou références d'adresses 0 et j l'identification du poste de travail nomade comme appartenant au site d'origine et habilité à lancer une transaction d'accès au procédé de diffusion d'information Multicast étendue.

Ainsi que représenté en outre en figure 4a, le système objet de l'invention comprend au niveau du site d'origine un module A₂ de transmission de ce site d'origine S₀ vers le poste de travail nomade après identification de ce dernier N₀ⱼ₂, du message d'offre d'accès à une diffusion d'information Multicast globale, c'est-à-dire du message GMO (GMD_{0g}). Ce message est représenté selon la structure illustrée en figure 3b par exemple.

En outre, le site d'origine comporte, ainsi que représenté en figure 4a, un module A₃ de réception du message d'acceptation d'offre d'accès aux informations en diffusion à la deuxième adresse de diffusion d'information Multicast globale, émis par le poste de travail nomade N₀ⱼ₂. Ce message est par exemple tel que représenté en figure 3c.

Le site d'origine S₀ comprend en outre un module A₄ de transfert des informations à diffuser de la première à la deuxième adresse de diffusion.

On comprend en particulier que le module A₄ précité permet par exemple d'exécuter le transfert précité conformément à la figure 2b et/ou conformément à la figure 2c compte tenu du rang du message de requête reçu par rapport au premier message de requête reçu de diffusion d'information Multicast étendue.

Enfin, le système d'origine S₀ comprend avantageusement un module de transmission par diffusion d'information Multicast globale des informations à diffuser sous la deuxième adresse, c'est-à-dire l'adresse GMD_{0g} pour les données ID_{0g} transmises en diffusion d'information Multicast globale.

Dans le mode de mise en oeuvre du système objet de l'invention tel que représenté aux figures 4a à 4c, on considère un mode de mise en oeuvre à titre d'exemple non limitatif dans lequel le site d'origine S₀ comprend le serveur de diffusion SD connecté au réseau IP par l'intermédiaire du routeur RO₀.

Dans cette situation, le module de réception du message de requête de diffusion d'information Multicast, module A₁, le module de transmission du message d'offre d'accès A₂, le module de réception du message d'acceptation A₃, le module de transfert des informations à diffuser de la première à la deuxième adresse de diffusion A₄ et enfin le module de transmission par diffusion d'information Multicast globale A₅ des informations à diffuser sous la deuxième adresse sont constitués par des modules logiciels implantés dans le routeur RO₀, ce routeur étant bien entendu muni d'organes d'entrée/sortie adaptés spécifiques à la transmission et à la réception de messages selon le procédé IP sur le réseau IP.

On comprend en particulier que le routeur RO₀ étant muni d'une unité de calcul CPU et d'une mémoire vive RAM, l'ensemble des modules A₁ à A₅ de type logiciel peut être mémorisé sur une mémoire de masse du routeur, chargé dans la mémoire de travail de type RAM et configuré comme un agent logiciel permettant la mise en oeuvre des étapes du procédé objet de l'invention tel que représenté en figures 2a à 2c.

Lorsque, selon un deuxième mode de mise en oeuvre non limitatif du système objet de l'invention au niveau du site d'origine S₀, le serveur de diffusion SD est constitué par une machine dédiée, celle-ci est connectée au réseau IP en l'absence de routeur par l'intermédiaire d'une carte réseau par exemple.

Une description plus détaillée d'un poste de travail nomade équipé pour la mise en oeuvre du procédé de diffusion d'information Multicast étendue, conforme à l'objet de la présente invention, tel que le poste de travail nomade N₀ⱼ₂ sur le site S₂ de la figure 4a sera préalablement donnée à une description du mode opératoire du système objet de l'invention en référence aux figures 4a à 4c.

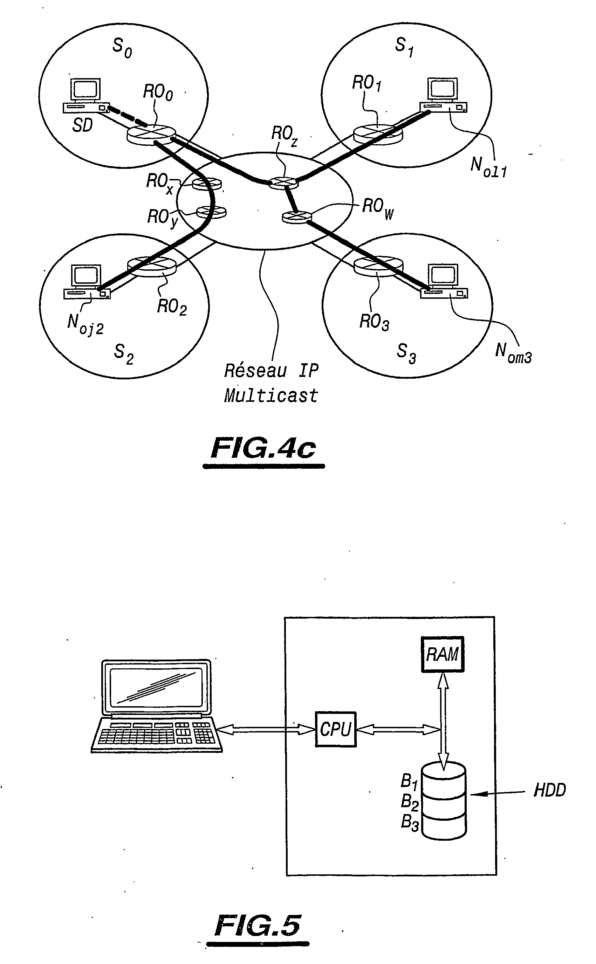

Le poste de travail nomade tel que le poste N₀ⱼ₂ sur la figure 4a comporte au moins, mémorisé en mémoire de masse de ce dernier, tel que représenté en figure 5, un module logiciel B1 de création et de transmission d'un message de requête de diffusion d'information Multicast étendue, c'est-à-dire du message EMR (LMD₀ᵢ) représenté en figure 3a, un module logiciel B₂ de réception et de lecture du message d'offre d'accès GMO (GMD_{0g}) tel que représenté par exemple en figure 3b, et, enfin, un module logiciel B₃ de création et de transmission vers le site d'origine S₀, par l'intermédiaire du réseau IP, du message d'acceptation AAO d'offre d'accès aux informations en diffusion à la deuxième adresse de diffusion d'information Multicast globale tel que représenté en figure 3c.

Bien entendu, la station de travail nomade comporte une unité de calcul CPU, une mémoire vive de type RAM. Les modules logiciels précités peuvent alors être chargés en mémoire de travail RAM pour exécuter les fonctions d'appel et d'interprétation de messages, ainsi que décrit précédemment dans la description en liaison avec les figures 2a à 2c.

Sur la figure 5, on a représenté à titre d'exemple non limitatif le poste de travail nomade comme constitué par un ordinateur portable par exemple.

Bien entendu, outre les modules logiciels précités B₁, B₂ et B₃, le poste de travail nomade comprend tout système d'entrée/sortie et de connexion en réseau de façon que le poste de travail nomade, tel que le poste N₀ⱼ₂ représenté en figure 4a sur le site S₂, soit connecté au réseau IP par l'intermédiaire d'un routeur RO₂. L'existence d'un routeur n'est pas indispensable mais correspond la plupart du temps aux situations habituellement rencontrées.

Enfin, bien que la station de travail nomade soit représentée en figure 5 sous la forme d'un ordinateur portable, cette station de travail nomade peut être en fait constituée par tout poste de travail, telle qu'un ordinateur de type pocket PC ou autre, muni des ressources suffisantes.

En outre, la notion de station de travail nomade recouvre avantageusement l'utilisation de toute station de travail fixe munie d'un code d'accès aux services de diffusion d'information Multicast étendue, ce code étant par exemple temporaire et géré par le serveur de diffusion SD implanté sur le site d'origine S₀.

Le mode opératoire du système tel que représenté en figure 4a est alors le suivant en référence aux figures 4a, 4b et 4c :

La station de travail nomade N₀ⱼ₂ est par exemple en visite sur le site S₂ et désire avoir accès et par exemple s'abonner à la diffusion locale au site d'origine S₀ dont l'adresse est LMD₀ᵢ.

La station de travail nomade N₀ⱼ₂ qui dispose en mémoire de masse par exemple de l'adresse Multicast de la diffusion locale LMD₀ᵢ détecte qu'il s'agit d'une diffusion limitée au site d'origine S₀.

La station de travail nomade précitée procède alors à l'envoi d'un message de requête de diffusion d'information Multicast étendue à l'agent logiciel ALo implanté sur le routeur RO₀ du site d'origine S₀, au lieu d'envoyer un message d'abonnement IGMP de type classique. Le message de requête est celui envoyé à l'étape A de la figure 2a. L'agent logiciel AL₀ est par exemple formé par les modules logiciels A₁ à A₅ précités exécutés par l'intermédiaire de la mémoire RAM et de l'unité de calcul CPU représentés sur la figure 4a.

L'agent logiciel AL₀ du site d'origine S₀ reçoit le message de requête précité. Après identification de la station de travail nomade, ainsi que décrit précédemment dans la description, le site d'origine S₀, par l'intermédiaire de l'agent logiciel précité, transmet le message d'offre d'accès ou d'abonnement

Bien entendu, outre les modules logiciels précités B₁, B₂ et B₃, le poste de travail nomade comprend tout système d'entrée/sortie et de connexion en réseau de façon que le poste de travail nomade, tel que le poste N₀ⱼ₂ représenté en figure 4a sur le site S₂, soit connecté au réseau IP par l'intermédiaire d'un routeur RO₂. L'existence d'un routeur n'est pas indispensable mais correspond la plupart du temps aux situations habituellement rencontrées.

Enfin, bien que la station de travail nomade soit représentée en figure 5 sous la forme d'un ordinateur portable, cette station de travail nomade peut être en fait constituée par tout poste de travail, telle qu'un ordinateur de type pocket PC ou autre, muni des ressources suffisantes.

En outre, la notion de station de travail nomade recouvre avantageusement l'utilisation de toute station de travail fixe munie d'un code d'accès aux services de diffusion d'information Multicast étendue, ce code étant par exemple temporaire et géré par le serveur de diffusion SD implanté sur le site d'origine S₀.

Le mode opératoire du système tel que représenté en figure 4a est alors le suivant en référence aux figures 4a, 4b et 4c :

La station de travail nomade N₀ⱼ₂ est par exemple en visite sur le site S₂ et désire avoir accès et par exemple s'abonner à la diffusion locale au site d'origine S₀ dont l'adresse est LMD₀ᵢ.

La station de travail nomade N₀ⱼ₂ qui dispose en mémoire de masse par exemple de l'adresse Multicast de la diffusion locale LMD₀ᵢ détecte qu'il s'agit d'une diffusion limitée au site d'origine S₀.

La station de travail nomade précitée procède alors à l'envoi d'un message de requête de diffusion d'information Multicast étendue à l'agent logiciel ALo implanté sur le routeur RO₀ du site d'origine S₀, au lieu d'envoyer un message d'abonnement IGMP de type classique. Le message de requête est celui envoyé à l'étape A de la figure 2a. L'agent logiciel AL₀ est par exemple formé par les modules logiciels A₁ à A₅ précités exécutés par l'intermédiaire de la mémoire RAM et de l'unité de calcul CPU représentés sur la figure 4a.

L'agent logiciel AL₀ du site d'origine S₀ reçoit le message de requête précité. Après identification de la station de travail nomade, ainsi que décrit précédemment dans la description, le site d'origine S₀, par l'intermédiaire de l'agent logiciel précité, transmet le message d'offre d'accès ou d'abonnement GMO (GMD_{0g}). Ce message d'offre d'abonnement indique en fait à la station de travail nomade que pour recevoir la diffusion limitée au site d'origine S₀ sur le site distinct S₂, la station de travail nomade doit accepter l'offre et s'abonner en fait à la diffusion Multicast globale dont l'adresse est la deuxième adresse GMD_{0g}.

En fait, en référence aux dispositions de la norme RFC 2236, on indique que la deuxième adresse de diffusion d'information Multicast globale précitée est une adresse correspondant à une diffusion Multicast globale ou limitée à l'organisation dont le routeur d'accès au site d'origine S₀ est identifiée comme étant la source.

Lorsque la station de travail nomade N₀ⱼ₂ reçoit le message d'offre d'accès, il accepte normalement l'offre d'accès ou s'abonne à la diffusion d'information à la deuxième adresse de diffusion d'information Multicast globale en envoyant le message d'acceptation AAO à son routeur d'accès, le routeur RO₂ représenté sur le site S₂ de la figure 4a.

Ce message d'acceptation d'accès ou d'abonnement est ensuite propagé à travers le réseau IP en mode point à point ainsi que mentionné précédemment dans la description.

Lorsque le message de requête de diffusion d'information Multicast étendue pour les données de diffusion à l'adresse de diffusion d'information Multicast locale considérée est le premier de ces messages de requête, alternative négative du test de comparaison O₂ de la figure 2c par exemple, le routeur d'accès au site d'origine S₀ accède ou s'abonne lui-même à la diffusion locale à l'adresse LMD₀ᵢ limitée au site d'origine S₀, afin bien entendu d'en recevoir les données ou informations ID₀ᵢ. Après réception du message d'acceptation d'accès à la diffusion d'information Multicast globale à la deuxième adresse GMD_{0g}, le routeur RO₀ d'accès du site d'origine S₀ procède par l'intermédiaire de l'agent logiciel et, en particulier, par l'intermédiaire du module logiciel A₄, à l'opération de redirection de ces informations et des données correspondantes selon l'étape D₂ de la figure 2b. L'opération de transmission des données et de l'information Multicast globale conformément à l'étape E de la figure 2a ou 2c par le site d'origine S₀, et en particulier par le module logiciel A₅ implanté dans le routeur RO₀, vers la station de travail nomade N₀ⱼ₂ est alors effectuée. La station de travail nomade précitée en visite sur le site S₂ reçoit alors les données de la diffusion locale de la première adresse par l'intermédiaire de la diffusion globale à la deuxième adresse.

La configuration du système objet de l'invention en réseau est alors celle représentée en figure 4a, la branche de l'arbre de diffusion Multicast étant représentée par le routeur d'accès RO₀ du site d'origine S₀, un routeur intermédiaire ROx du réseau IP Multicast d'interconnexion et d'un autre routeur intermédiaire ROy de ce même réseau IP Multicast d'interconnexion, lequel est relié au routeur d'accès RO₂ de la station de travail nomade et du site distinct S₂.

En référence à la figure 4b, on considère maintenant soit la même station de travail nomade d'indice ou de code d'identification j, soit une autre station de travail nomade d'indice ou de code d'identification I mais appartenant au même site d'origine S₀ en visite sur le site distinct S₁.

Pour les besoins de la description, on considère une autre station de travail nomade de code ou indice d'identification I spécifique souhaitant procéder à un accès ou à un abonnement à la même diffusion locale du site d'origine S₀ et de même adresse LMD₀ᵢ.

De même que dans le cas de la station de travail nomade N₀ⱼ₂, l'autre station de travail nomade N₀ₗ₁ détecte qu'il s'agit d'une diffusion limitée au site d'origine S₀.

L'autre station de travail nomade transmet un message de requête de diffusion Multicast étendue à l'agent logiciel implanté sur le routeur d'accès RO₀ du site d'origine S₀.

Ce message indique l'adresse LMD₀ᵢ de la diffusion concernée.

L'agent logiciel implanté sur le routeur RO₀ du site d'origine reçoit le message de requête de diffusion d'information Multicast étendue précité et, après identification de l'autre station de travail nomade, transmet le message d'offre d'accès ou d'abonnement GMO (GMD_{0g}).

La diffusion d'information Multicast étendue étant déjà en cours, aucune autre action n'est amenée par le routeur d'accès RO₀ du site d'origine S₀. En effet, en référence à la figure 2c et où t > 1, c'est-à-dire alternative positive de l'opération de comparaison O₂, le rang du message de requête de diffusion d'information Multicast étendue étant supérieur à 1, le simple appel de la structure de données permanente à l'étape O₃, permet alors d'appeler l'étape O₄ de suppression de l'étape D. Le procédé objet de l'invention, ainsi que représenté en figure 2c, permet alors, par l'intermédiaire des commutateurs logiques C₁ et C₂, le passage direct de l'étape D à l'étape E.

Lorsque la station de travail nomade N₀ₗ₁ reçoit le message d'offre d'accès, elle répond par le message d'acceptation d'offre d'accès ou d'abonnement à la deuxième adresse de diffusion en envoyant le message d'acceptation AA0 sous forme d'abonnement IGMP au routeur d'accès RO₁ du site distinct S₁. La diffusion d'information Multicast globale à la deuxième adresse de diffusion étant déjà en cours dans le réseau IP, en particulier au niveau du routeur intermédiaire ROₓ, une nouvelle branche de l'arbre de diffusion est ainsi créée, laquelle consiste, à titre d'exemple non limitatif, en l'interconnexion du routeur intermédiaire ROₓ et d'un routeur RO_{z} lui-même connecté au routeur d'accès RO₁ du site distinct S₁.

La station de travail nomade N₀ₗ₁ reçoit ainsi les données de la diffusion locale à l'adresse LMD₀ᵢ par l'intermédiaire de la diffusion globale à la deuxième adresse GMD_{0g}.

L'état du système en réseau objet de l'invention est tel que représenté en figure 4b.

Enfin, l'un de ces postes de travail nomades ou un poste de travail nomade encore différent d'indice ou de code d'identification m procède, ainsi que représenté en figure 4c à l'émission d'une requête de diffusion d'information Multicast étendue à partir du site distinct S₃ par exemple, le processus est semblable à celui décrit relativement au site distinct S₁, l'étape D de la figure ou de la figure 2c étant toujours supprimés. Le système en réseau objet de l'invention dans cette situation correspond à celui représenté en figure 4c, l'arbre de diffusion comportant en outre la branche supplémentaire constituée par le routeur intermédiaire RO_{z} et RO_{w} du réseau IP par exemple, connecté au routeur RO₃ du site distinct S₃.

On comprend ainsi, à l'observation des figures 4a à 4c, que le système objet de l'invention permet une diffusion d'information de type Multicast étendue depuis la source de diffusion SD jusqu'au récepteur final en l'absence de toute utilisation de tunnel de type Unicast ou encore de duplication systématique des données.

Ainsi, pour chaque diffusion faisant l'objet d'une demande de diffusion d'information Multicast étendue, conforme à l'objet de la présente invention, de la part d'un poste de travail nomade, le procédé objet de l'invention permet d'engendrer la création d'un arbre de diffusion Multicast sur le réseau IP d'interconnexion.

Bien que l'aspect sécuritaire du contrôle d'accès et de l'accès aux informations diffusées telles que processus d'identification de chaque station de travail nomade, chiffrement des données et authentification des données ne soient pas l'un des objets de la présente invention on indique que les processus d'identification, d'authentification et de chiffrement des données précitées permettent d'assurer la mise en oeuvre d'un procédé de diffusion de données Multicast étendue particulièrement avantageux.

Enfin, l'invention concerne bien entendu tout produit logiciel enregistré sur un support de mémorisation pour la mise en oeuvre par un ordinateur tel qu'un poste de travail nomade par exemple du procédé de diffusion d'information Multicast étendue décrit précédemment dans la description à partir d'une diffusion Multicast locale sur un site d'origine vers au moins un site distinct hébergeant ce poste de travail nomade et relié à ce site d'origine par le réseau IP.

La diffusion d'information Multicast locale étant engendrée par une source de diffusion d'information implantée à une première adresse de diffusion d'information Multicast locale dans le site d'origine, le produit logiciel comporte pour appel au niveau du poste de travail nomade le module logiciel B₁ de création et de transmission d'un message de requête de diffusion d'information Multicast étendue. Ce message de requête contient bien entendu au moins la première adresse de diffusion d'information Multicast locale LMD₀ᵢ et un code d'identification du poste de travail nomade considéré N₀ⱼₖ, un module logiciel B₂ de réception et de lecture du message d'offre d'accès à une diffusion d'information Multicast globale, message GMO (GMD_{0g}) comprenant au moins la deuxième adresse de diffusion d'information Multicast globale GMD_{0g} dont la source de diffusion est identifiée dans le site d'origine, et un module logiciel B3 de création et de transmission vers le site d'origine S₀ du message d'acceptation d'offre d'accès AAO aux informations en diffusion à la deuxième adresse de diffusion d'information Multicast globale GMD_{0g}.

L'invention concerne également un produit logiciel enregistré sur un support de mémorisation pour la mise en oeuvre par un ordinateur du procédé de diffusion d'information Multicast étendue à partir d'une diffusion Multicast locale sur un site d'origine S₀ vers au moins un site distinct Sₖ hébergeant ce poste de travail nomade et relié à ce site d'origine par le réseau IP. Le produit logiciel comporte pour appel au niveau du site d'origine S₀ un module logiciel A₁ de réception du message de requête de diffusion d'information Multicast étendue émis par le poste de travail nomade à partir du site distinct, ce module logiciel A₁ permettant d'assurer l'identification sur le site distinct du poste de travail nomade par le site d'origine par l'intermédiaire des indices ou références d'adresse 0, j et k attribuées aux codes d'identification du poste de travail nomade, un module logiciel A₂ de transmission du site d'origine vers le poste de travail nomade d'un message d'offre d'accès à une diffusion Multicast d'information globale. Ce message d'offre d'accès comprend au moins la deuxième adresse de diffusion d'information Multicast globale GMD_{0g} dont la source de diffusion est identifiée dans le site d'origine, un module logiciel B₃ de réception du message d'acceptation d'offre d'accès aux informations en diffusion à la deuxième adresse de diffusion d'information Multicast globale émis par le poste de travail nomade, un module logiciel B₄ de transfert des informations à diffuser de la première à la deuxième adresse de diffusion, ce module de logiciel B₄ pouvant simplement assurer la création de la structure de données permanente précédemment mentionnée dans la description et bien entendu, la redirection des informations à diffuser de la première à la deuxième adresse en correspondance biunivoque de ces adresses, un module logiciel A₅ de transmission par diffusion d'information Multicast globale des informations à diffuser sous la deuxième adresse précitée.

## Revendications

1. Procédé de diffusion d'information Multicast étendue à partir d'une diffusion d'information Multicast locale sur un site d'origine à un utilisateur de poste de travail nomade appartenant à ce site d'origine, vers au moins un site distinct hébergeant ce poste de travail nomade et relié à ce site d'origine par un réseau IP, la diffusion d'information Multicast locale étant engendrée par une source de diffusion d'information implantée à une première adresse de diffusion d'information Multicast locale dans ce site d'origine, **caractérisé en ce que** celui-ci consiste, suite à l'interconnexion dudit poste de travail nomade au réseau IP sur ce site distinct, à :
a) transmettre, du poste de travail nomade vers le site d'origine, un message de requête de diffusion d'information Multicast étendue, ledit message de requête contenant au moins ladite première adresse de diffusion d'information Multicast locale et un code d'identification dudit poste de travail nomade ; et, suite à l'identification dudit poste de travail nomade par ledit site d'origine,
b) transmettre, du site d'origine vers ledit poste de travail nomade un message d'offre d'accès à une diffusion d'information Multicast globale, ledit message d'offre d'accès comprenant au moins une deuxième adresse de diffusion d'information Multicast globale, dont la source de diffusion est identifiée dans le site d'origine ; et, suite à la réception dudit message d'offre d'accès par ledit poste de travail nomade,
c) transmettre du poste de travail nomade vers le site d'origine, par l'intermédiaire du réseau IP, un message d'acceptation d'offre d'accès aux informations en diffusion à ladite deuxième adresse de diffusion d'information Multicast globale ; et, après réception du message d'acceptation d'offre d'accès au niveau dudit site d'origine,
d) transférer les informations à diffuser de la première à la deuxième adresse de diffusion ; et
e) transmettre, par diffusion Multicast globale les informations à diffuser sous la deuxième adresse, ce qui permet audit poste de travail nomade interconnecté sur le site distinct de recevoir, sur le site distinct, les informations en diffusion sous la première adresse de diffusion locale, diffusées sous la deuxième adresse de diffusion globale.

2. Procédé selon la revendication 1, **caractérisé en ce que** les étapes a), b) et c) de transmission entre le poste de travail nomade et le site d'origine, du message de requête de diffusion Multicast étendue, du message d'offre d'accès à une diffusion Multicast globale, respectivement du message d'acceptation d'offre d'accès sont exécutées en mode point à point.

3. Procédé selon la revendication 1 ou 2, **caractérisé en ce que** l'étape e) de transmission Multicast globale est effectuée en mode point - multipoint.

4. Procédé selon l'une des revendications 1 à 3, **caractérisé en ce que** pour un site d'origine comprenant un serveur de diffusion connecté au réseau IP par l'intermédiaire d'un routeur, l'étape consistant à transférer les informations à diffuser de la première à la deuxième adresse de diffusion comporte :
- une étape de diffusion Multicast locale des informations à diffuser du serveur de diffusion vers ledit routeur ;
- une étape de redirection des informations à diffuser par substitution de la deuxième adresse de diffusion Multicast globale à la première adresse de diffusion locale.

5. Procédé selon l'une des revendications 1 à 4, **caractérisé en ce que** pour une pluralité de messages de requête de diffusion Multicast étendue relative à une même première adresse de diffusion Multicast locale émanant d'une pluralité de stations de travail nomades appartenant audit site d'origine et interconnectées chacune au réseau IP sur un site distinct, ladite étape e) consistant à transmettre, par diffusion Multicast globale, les informations à diffuser sous la deuxième adresse consiste à créer un arbre de diffusion Multicast globale, dont l'élément racine est constitué par l'un des routeurs communs aux branches de diffusion constitutives de cet arbre de diffusion Multicast globale.

6. Procédé selon l'une des revendications 1 à 5, **caractérisé en ce que** ladite deuxième adresse étant maintenue et validée pour une diffusion d'information Multicast locale à ladite première adresse, ladite étape d) consistant à transférer les informations à diffuser de la première à la deuxième adresse de diffusion est supprimée pour tout message de requête de diffusion Multicast étendue à cette deuxième adresse ultérieur au premier message de requête de diffusion Multicast étendue à ladite deuxième adresse.

7. Système de diffusion d'information Multicast étendue, à partir d'une diffusion Multicast locale d'un site d'origine à un utilisateur de poste de travail nomade appartenant à ce site d'origine, vers au moins un site distinct hébergeant ce poste de travail nomade et relié à ce site d'origine par un réseau IP, la diffusion d'information Multicast locale étant engendrée par une source de diffusion d'information implantée à une première adresse de diffusion Multicast locale dans ce site d'origine, **caractérisé en ce que** ledit système comporte au moins, au niveau dudit site d'origine :
- un moyen de réception d'un message de requête de diffusion d'information Multicast étendue, émis par ledit poste de travail nomade à partir dudit site distinct, ledit message de requête contenant au moins ladite première adresse de diffusion d'information Multicast locale et un code d'identification dudit poste de travail nomade, lesdits moyens de réception permettant d'assurer l'identification dudit poste de travail nomade par le site d'origine ;
- un moyen de transmission, du site d'origine vers le poste de travail nomade d'un message d'offre d'accès à une diffusion d'information Multicast globale, ledit message d'offre d'accès comprenant au moins une deuxième adresses de diffusion d'information Multicast globale, dont la source de diffusion est identifiée dans le site d'origine ;
- un moyen de réception d'un message d'acceptation d'offre d'accès aux informations en diffusion à ladite deuxième adresse de diffusion d'information Multicast globale, émis par ledit poste de travail nomade ;
- un moyen de transfert des informations à diffuser de la première à la deuxième adresse de diffusion ;
- un moyen de transmission, par diffusion d'information Multicast globale, des informations à diffuser sous la deuxième adresse.

8. Système selon la revendication 7, **caractérisé en ce que** lesdits moyens de réception d'un message de requête de diffusion Multicast étendue, de transmission du site d'origine vers le poste de travail nomade d'un message d'offre d'accès à une diffusion Multicast globale, de réception d'un message d'acceptation d'offre d'accès aux informations en diffusion à ladite deuxième adresse de diffusion Multicast globale, de transfert des informations à diffuser de la première à la deuxième adresse de diffusion, de transmission, par diffusion Multicast globale, des informations à diffuser sous la deuxième adresse sont constitués par des modules logiciels.

9. Système selon la revendication 8, **caractérisé en ce que** lesdits modules logiciels sont implantés sur une machine dédiée interconnectée en réseau local IP sur le site d'origine.

10. Système selon la revendication 8, **caractérisé en ce que** ledit site d'origine comprenant un serveur de diffusion connecté au réseau IP par l'intermédiaire d'un routeur, lesdits modules logiciels sont implantés dans ledit routeur.

11. Poste de travail nomade équipé pour la mise en oeuvre du procédé de diffusion d'information Multicast étendue à partir d'une diffusion d'information Multicast locale d'un site d'origine, auquel appartient ce poste de travail nomade, vers au moins un site distinct hébergeant ce poste de travail nomade et relié à ce site d'origine par un réseau IP, la diffusion d'information Multicast locale étant engendrée par une source de diffusion d'information implantée à une première adresse de diffusion d'information Multicast locale dans ce site d'origine, **caractérisé en ce que** ledit poste de travail nomade comporte au moins, mémorisé en mémoire de masse de ce dernier :
- un module logiciel de création et de transmission d'un message de requête de diffusion d'information Multicast étendue, ce message de requête contenant au moins une première adresse de diffusion d'information Multicast locale et un code d'identification de ce poste de travail nomade ;
- un module logiciel de réception et de lecture d'un message d'offre d'accès à une diffusion d'information Multicast globale, ce message d'offre d'accès comprenant au moins une deuxième adresse de diffusion d'information Multicast globale, dont la source de diffusion est identifiée dans le site d'origine ;
- un module logiciel de création et de transmission vers le site d'origine, par l'intermédiaire du réseau IP, d'un message d'acceptation d'offre d'accès aux informations en diffusion à ladite deuxième adresse de diffusion d'information Multicast globale.

12. Produit logiciel enregistré sur un support de mémorisation pour la mise en oeuvre par un ordinateur du type poste de travail nomade du procédé de diffusion d'information Multicast étendue, à partir d'une diffusion Multicast locale sur un site d'origine, vers au moins un site distinct hébergeant ce poste de travail nomade et relié à ce site d'origine par un réseau IP, la diffusion d'information Multicast locale étant engendrée par une source de diffusion d'information implantée à une première adresse de diffusion d'information Multicast locale dans ce site d'origine, selon l'une des revendications 1 à 6, **caractérisé en ce qu'**il comporte pour appel au niveau dudit poste de travail nomade :
- un module logiciel de création et de transmission d'un message de requête de diffusion d'information Multicast IP étendue, ce message de requête contenant, au moins une première adresse de diffusion d'information Multicast locale et un code d'identification de ce poste de travail nomade ;
- un module logiciel de réception et de lecture d'un message d'offre d'accès à une diffusion d'information Multicast globale, ce message d'offre d'accès comprenant au moins une deuxième adresse de diffusion d'information Multicast globale, dont la source de diffusion est identifiée dans le site d'origine ;
- un module logiciel de création et de transmission vers le site d'origine, par l'intermédiaire du réseau IP, d'un message d'acceptation d'offre d'accès aux informations en diffusion à ladite deuxième adresse de diffusion d'information Multicast globale, lorsque ledit produit logiciel est mis en oeuvre sur ledit ordinateur.

13. Produit logiciel enregistré sur un support de mémorisation pour la mise en oeuvre par un ordinateur du procédé de diffusion d'information Multicast étendue à partir d'une diffusion Multicast locale sur un site d'origine, vers au moins un site distinct hébergeant ce poste de travail nomade et relié à ce site d'origine par un réseau IP, à partir d'une source de diffusion d'information implantée à une première adresse de diffusion d'information Multicast locale dans ce site d'origine, selon l'une des revendications 1 à 6, **caractérisé en ce qu'**il comporte pour appel au niveau dudit site d'origine :
- un module logiciel de réception d'un message de requête de diffusion d'information Multicast IP étendue émis par le poste de travail nomade à partir du site distinct, ce message de requête contenant au moins la première adresse de diffusion d'information Multicast locale et un code d'identification dudit poste de travail nomade, ledit module logiciel de réception permettant d'assurer l'identification sur le site distinct dudit poste de travail nomade par le site d'origine ;
- un module logiciel de transmission du site d'origine, vers le poste de travail nomade, d'un message d'offre d'accès à une diffusion Multicast d'information globale, ledit message d'offre d'accès comprenant au moins une deuxième adresse de diffusion d'information Multicast globale, dont la source de diffusion est identifiée dans le site d'origine ;
- un module logiciel de réception d'un message d'acceptation d'offre d'accès aux informations en diffusion à ladite deuxième adresse de diffusion d'information Multicast globale, émis par ledit poste de travail nomade ;
- un module logiciel de transfert des informations à diffuser de la première à la deuxième adresse de diffusion ;
- un module logiciel de transmission par diffusion d'information Multicast globale des informations à diffuser sous ladite deuxième adresse, lorsque ledit produit logiciel est mis en oeuvre sur ledit ordinateur.

14. Produit logiciel selon la revendication 13, **caractérisé en ce que** pour un site d'origine comportant un routeur, lesdits modules logiciels sont mémorisés dans une mémoire de masse dudit routeur.

15. Structure de données représentative d'un message de requête de diffusion d'information Multicast étendue, échangé dans le cadre d'un procédé de diffusion d'information Multicast étendue à partir d'une diffusion Multicast locale sur un site d'origine à un utilisateur de poste de travail nomade appartenant à ce site d'origine, vers au moins un site distinct hébergeant ce poste de travail nomade et relié à ce site d'origine par un réseau IP, la diffusion d'information Multicast locale étant engendrée par une source de diffusion d'information implantée à une première adresse de diffusion d'information Multicast locale dans ce site d'origine,
**caractérisé en ce que** ledit message de requête de diffusion d'information Multicast étendue est transmis du poste de travail nomade vers le site d'origine
et **en ce que** ladite structure de données comprend au moins :
- un champ d'en-tête comprenant un code d'identification de message de requête de diffusion d'information Multicast étendue ;
- un champ comprenant la première adresse de diffusion d'information Multicast locale ;
- un champ comprenant un code d'identification du poste de travail nomade.

16. Structure de données représentative d'un message d'offre d'accès à une diffusion d'information Multicast globale, échangé dans le cadre d'un procédé de diffusion d'information Multicast étendue à partir d'une diffusion Multicast locale sur un site d'origine à un utilisateur de poste de travail nomade appartenant à ce site d'origine, vers au moins un site distinct hébergeant ce poste de travail nomade et relié à ce site d'origine par le réseau IP, la diffusion d'information Multicast locale étant engendrée par une source de diffusion d'information implantée à une première adresse de diffusion d'information Multicast locale dans ce site d'origine,
**caractérisé en ce que** ledit message d'offre d'accès à une diffusion d'information Multicast globale est transmis du site d'origine vers ledit poste de travail nomade,
et **en ce que** ladite structure de données comprend au moins :
- un champ d'en-tête comprenant un code d'identification de message d'offre d'accès;
- un champ comprenant une deuxième adresse de diffusion d'information Multicast globale, sous laquelle doivent être diffusées les informations en diffusion sous la première adresse de diffusion locale.

17. Structure de données représentative d'un message d'acceptation d'offre d'accès à une diffusion d'information Multicast globale, échangé dans le cadre d'un procédé de diffusion d'information Multicast étendue à partir d'une diffusion Multicast locale sur un site d'origine à un utilisateur de poste de travail nomade appartenant à ce site d'origine, vers au moins un site distinct hébergeant ce poste de travail nomade et relié à ce site d'origine par un réseau IP, la diffusion d'information Multicast locale étant engendrée par une source de diffusion d'information implantée à une première adresse de diffusion d'information Multicast locale dans ce site d'origine,
**caractérisé en ce que** ledit message d'acceptation d'offre d'accès à une diffusion d'information Multicast globale est transmis du poste de travail nomade vers ledit site d'origine
et **en ce que** ladite structure de données comprend :
- un champ d'en-tête comportant un code d'identification de message d'acceptation d'offre d'accès ;
- un champ comportant une deuxième adresse de diffusion d'information Multicast globale, sous laquelle doivent être diffusées les informations en diffusion sous la première adresse de diffusion locale.

## Claims

1. Method of extended multicast information broadcasting from a local multicast information broadcasting on an originating site to a roaming terminal user belonging to this originating site, to at least one separate site hosting this roaming terminal and linked to this originating site by an IP network, the local multicast information broadcasting being generated by an information broadcasting source located at a first local multicast information broadcasting address in this originating site, **characterized in that** said method consists, after interconnecting said roaming terminal to the IP network on this separate site, in:
a) transmitting, from the roaming terminal to the originating site, an extended multicast information broadcasting request message, said request message containing at least said first local multicast information broadcasting address and an identification code of said roaming terminal; and, following the identification of said roaming terminal by said originating site,
b) transmitting, from the originating site to said roaming terminal, a message offering access to a global multicast information broadcasting, said message offering access including at least one second global multicast information broadcasting address, the broadcasting source of which is identified in the originating site; and, following the receipt of said message offering access by said roaming terminal,
c) transmitting from the roaming terminal to the originating site, via the IP network, a message accepting the offer of access to the information being broadcast at said second global multicast information broadcasting address; and, after receipt of the message accepting the offer of access on said originating site,
d) transferring the information to be broadcast from the first to the second broadcasting address; and
e) transmitting, by global multicast broadcasting, the information to be broadcast under the second address, which enables said roaming terminal interconnected to the separate site to receive, on the separate site, the information being broadcast under the first local broadcasting address, broadcast under the second global broadcasting address.

2. Method according to Claim 1, **characterized in that** the steps a), b) and c) for transmission between the roaming terminal and the originating site, of the extended multicast broadcasting request message, of the message offering access to a global multicast broadcasting, or of the message accepting the offer of access are executed in point-to-point mode.

3. Method according to Claim 1 or 2, **characterized in that** the step e) for global multicast transmission is performed in point-multipoint mode.

4. Method according to one of Claims 1 to 3, **characterized in that**, for an originating site including a broadcasting server connected to the IP network via a router, the step consisting in transferring the information to be broadcast from the first to the second broadcasting address includes:
- a step for local multicast broadcasting of the information to be broadcast from the broadcasting server to said router;
- a step for redirecting the information to be broadcast by substituting the second global multicast broadcasting address for the first local broadcasting address.

5. Method according to one of Claims 1 to 4, **characterized in that**, for a plurality of extended multicast broadcasting request messages relating to one and the same first local multicast broadcasting address emanating from a plurality of roaming terminals belonging to said originating site and each interconnected to the IP network on a separate site, said step e), consisting in transmitting, by global multicast broadcasting, the information to be broadcast under the second address consists in creating a global multicast broadcasting tree, the root element of which consists of one of the routers common to the broadcasting branches making up this global multicast broadcasting tree.

6. Method according to one of Claims 1 to 5, **characterized in that**, said second address being maintained and validated for a local multicast information broadcasting to said first address, said step d) consisting in transferring the information to be broadcast from the first to the second broadcasting address is deleted for any extended multicast broadcasting request message to this second address following the first extended multicast broadcasting request message to said second address.

7. System of extended multicast information broadcasting, from a local multicast broadcasting on an originating site to a roaming terminal user belonging to this originating site, to at least one separate site hosting this roaming terminal and linked to this originating site by an IP network, the local multicast information broadcasting being generated by an information broadcasting source located at a first local multicast broadcasting address in this originating site, **characterized in that** said system includes at least, at said originating site:
- a means of receiving an extended multicast information broadcasting request message, sent by said roaming terminal from said separate site, said request message containing at least said first local multicast information broadcasting address and an identification code of said roaming terminal, said reception means allowing the identification of said roaming terminal by the originating site;
- a means of transmitting, from the originating site to the roaming terminal, a message offering access to a global multicast information broadcasting, said message offering access including at least one second global multicast information broadcasting address, the broadcasting source of which is identified in the originating site;
- a means of receiving a message accepting the offer of access to the information being broadcast at said second global multicast information broadcasting address, sent by said roaming terminal;
- a means of transferring the information to be broadcast from the first to the second broadcasting address;
- a means of transmission, by global multicast information broadcasting, of the information to be broadcast under the second address.

8. System according to Claim 7, **characterized in that** said means of receiving an extended multicast broadcasting request message, of transmitting, from the originating site to the roaming terminal, a message offering access to a global multicast broadcasting, of receiving a message accepting the offer of access to the information being broadcast at said second global multicast broadcasting address, of transferring the information to be broadcast from the first to the second broadcasting address, of transmitting, by global multicast broadcasting, the information to be broadcast under the second address, are formed by software modules.

9. System according to Claim 8, **characterized in that** said software modules are located on a dedicated machine interconnected by IP local area network on the originating site.

10. System according to Claim 8, **characterized in that**, said originating site including a broadcasting server connected to the IP network via a router, said software modules are located in said router.

11. Roaming terminal equipped to implement the method of extended multicast information broadcasting, from a local multicast information broadcasting on an originating site, to which this roaming terminal belongs, to at least one separate site hosting this roaming terminal and linked to this originating site by an IP network, the local multicast information broadcasting being generated by an information broadcasting source located at a first local multicast information broadcasting address in this originating site, **characterized in that** said roaming terminal includes at least, stored in the mass memory of the latter:
- a software module for creating and transmitting an extended multicast information broadcasting request message, this request message containing at least one first local multicast information broadcasting address and an identification code of this roaming terminal;
- a software module for receiving and reading a message offering access to a global multicast information broadcasting, this message offering access including at least one second global multicast information broadcasting address, the broadcasting source of which is identified in the originating site;
- a software module for creating and transmitting to the originating site, via the IP network, a message accepting the offer of access to the information being broadcast at said second global multicast information broadcasting address.

12. Software product stored on a storage medium for the implementation, by a roaming terminal type computer, of the method of extended multicast information broadcasting, from a local multicast broadcasting on an originating site, to at least one separate site hosting this roaming terminal and linked to this originating site by an IP network, the local multicast information broadcasting being generated by an information broadcasting source located at a first multicast information broadcasting address in this originating site, according to one of Claims 1 to 6, **characterized in that** it includes, for invoking on said roaming terminal:
- a software module for creating and transmitting an extended IP multicast information broadcasting request message, this request message containing at least a first local multicast information broadcasting address and an identification code of this roaming terminal;
- a software module for receiving and reading a message offering access to a global multicast information broadcasting, this message offering access including at least one second global multicast information broadcasting address, the broadcasting source of which is identified in the originating site;
- a software module for creating and transmitting to the originating site, via the IP network, a message accepting the offer of access to the information being broadcast at said second global multicast information broadcasting address,
when said software product is implemented on said computer.

13. Software product stored on a storage medium for the implementation, by a roaming terminal type computer, of the method of extended multicast information broadcasting, from a local multicast broadcasting on an originating site, to at least one separate site hosting this roaming terminal and linked to this originating site by an IP network, from an information broadcasting source located at a first local multicast information broadcasting address in this originating site, according to one of Claims 1 to 6, **characterized in that** it includes, for invoking on said originating site:
- a software module for receiving an extended IP multicast information broadcasting request message sent by the roaming terminal from the separate site, this request message including at least the first local multicast information broadcasting address and an identification code of said roaming terminal, said receiving software module allowing the identification on the separate site of said roaming terminal by the originating site;
- a software module for transmitting from the originating site, to the roaming terminal, a message offering access to a global multicast information broadcasting, said message offering access including at least one second global multicast information broadcasting address, the broadcasting source of which is identified in the originating site;
- a software module for receiving a message accepting the offer of access to the information being broadcast at said second global multicast information broadcasting address, sent by said roaming terminal;
- a software module for transferring the information to be broadcast from the first to the second broadcasting address;
- a software module for transmitting by global multicast information broadcasting, the information to be broadcast under said second address,
when said software product is implemented on said computer.

14. Software product according to Claim 13, **characterized in that**, for an originating site including a router, said software modules are stored in a mass memory of said router.

15. Data structure representative of an extended multicast information broadcasting request message, exchanged in the context of a method of extended multicast information broadcasting, from a local multicast broadcasting on an originating site to a roaming terminal user belonging to this originating site, to at least one separate site hosting this roaming terminal and linked to this originating site by an IP network, the local multicast information broadcasting being generated by an information broadcasting source located at a first local multicast information broadcasting address in this originating site,
**characterized in that** said extended multicast information broadcasting request message is transmitted from the roaming terminal to the originating site
and **in that** said data structure includes at least:
- a header field containing an extended multicast information broadcasting request message identification code;
- a field containing the first local multicast information broadcasting address;
- a field containing an identification code of the roaming terminal.

16. Data structure representative of a message offering access to a global multicast information broadcasting, exchanged in the context of a method of extended multicast information broadcasting, from a local multicast broadcasting on an originating site to a roaming terminal user belonging to this originating site, to at least one separate site hosting this roaming terminal and linked to this originating site by the IP network, the local multicast information broadcasting being generated by an information broadcasting source located at a first local multicast information broadcasting address in this originating site,
**characterized in that** said message offering access to a global multicast information broadcasting is transmitted from the originating site to said roaming terminal,
and **in that** said data structure includes at least:
- a header field containing an access offer message identification code;
- a field containing a second global multicast information broadcasting address, under which should be broadcast the information being broadcast under the first local broadcasting address.

17. Data structure representative of a message accepting the offer of access to a global multicast information broadcasting, exchanged in the context of a method of extended multicast information broadcasting, from a local multicast broadcasting on an originating site to a roaming terminal user belonging to this originating site, to at least one separate site hosting this roaming terminal and linked to this originating site by an IP network, the local multicast information broadcasting being generated by an information broadcasting source located at a first local multicast information broadcasting address in this originating site,
**characterized in that** said message accepting the offer of access to a global multicast information broadcasting is transmitted from the roaming terminal to said originating site,
and **in that** said data structure includes:
- a header field containing an access offer acceptance message identification code;
- a field containing a second global multicast information broadcasting address, under which should be broadcast the information being broadcast under the first local broadcasting address.

## Patentansprüche

1. Verfahren zur erweiterten Multicast-Informationsverbreitung ausgehend von einer lokalen Multicast-Informationsverbreitung an einem Ursprungsstandort an einen Benutzer eines Nomaden-Arbeitsplatzes, der zu diesem Ursprungsstandort gehört, zu mindestens einem getrennten Standort, an dem dieser Nomaden-Arbeitsplatz sich befindet und der mit diesem Ursprungsstandort über ein IP-Netz verbunden ist, wobei die lokale Multicast-Informationsverbreitung von einer Informationsverbreitungsquelle erzeugt wird, die an einer ersten lokalen Multicast-Informationsverbreitungsadresse an diesem Ursprungsstandort eingesetzt ist, **dadurch gekennzeichnet, dass** das Verfahren nach der Vernetzung des Nomaden-Arbeitsplatzes mit dem IP-Netz an diesem getrennten Standort darin besteht:
a) vom Nomaden-Arbeitsplatz zum Ursprungsstandort eine erweiterte Multicast-Informationsverbreitung-Anfragemeldung zu übertragen, wobei die Anfragemeldung mindestens die erste lokale Multicast-Informationsverbreitungsadresse und einen Identifikationscode des Nomaden-Arbeitsplatzes enthält; und nach der Identifikation des Nomaden-Arbeitsplatzes durch den Ursprungsstandort
b) vom Ursprungsstandort zum Nomaden-Arbeitsplatz eine Zugangsangebotsmeldung zu einer globalen Multicast-Informationsverbreitung zu übertragen, wobei die Zugangsangebotsmeldung mindestens eine zweite globale Multicast-Informationsverbreitungsadresse enthält, deren Verbreitungsquelle im Ursprungsstandort identifiziert ist; und nach dem Empfang der Zugangsangebotmeldung durch den Nomaden-Arbeitsplatz
c) vom Nomaden-Arbeitsplatz zum Ursprungsstandort über das IP-Netz eine Annahmemeldung des Zugangsangebots zu den an der zweiten globalen Multicast-Informationsverbreitungsadresse verbreiteten Informationen zu übertragen; und nach Empfang der Zugangsangebot-Annahmemeldung durch den Ursprungsstandort
d) die zu verbreitenden Daten von der ersten zur zweiten Diffusionsadresse zu übertragen; und
e) durch globale Multicastverbreitung die unter der zweiten Adresse zu verbreitenden Informationen zu übertragen, was es dem am getrennten Standort vernetzten Nomaden-Arbeitsplatz ermöglicht, am getrennten Standort die unter der ersten lokalen Verbreitungsadresse verbreiteten Informationen zu empfangen, die unter der zweiten globalen Verbreitungsadresse verbreitet werden.

2. Verfahren nach Anspruch 1, **dadurch gekennzeichnet, dass** die Schritte a), b) und c) der Übertragung der Anfragemeldung zur erweiterten Multicastverbreitung, der Zugangsangebotsmeldung zu einer globalen Multicastverbreitung, bzw. der Zugangsangebots-Annahmemeldung, zwischen dem Nomaden-Arbeitsplatz und dem Ursprungsstandort im Punkt-zu-Punkt-Modus ausgeführt werden.

3. Verfahren nach Anspruch 1 oder 2, **dadurch gekennzeichnet, dass** der Schritt e) der globalen Multicastübertragung im Punkt-zu-Multipunkt-Modus durchgeführt wird.

4. Verfahren nach einem der Ansprüche 1 bis 3, **dadurch gekennzeichnet, dass** für einen Ursprungsstandort, der einen Verbreitungsserver aufweist, der über einen Router mit dem IP-Netz verbunden ist, der Schritt, der darin besteht, die zu verbreitenden Informationen von der ersten zur zweiten Verbreitungsadresse zu übertragen, aufweist:
- einen Schritt der lokalen Multicastverbreitung der zu verbreitenden Informationen vom Sendeserver zum Router;
- einen Schritt des Umleitens der zu verbreitenden Informationen durch Ersetzen der ersten lokalen Verbreitungsadresse durch die zweite globale Multicastverbreitungsadresse.

5. Verfahren nach einem der Ansprüche 1 bis 4, **dadurch gekennzeichnet, dass** für mehrere erweiterte Multicastverbreitung-Anfragemeldungen bezüglich der gleichen ersten lokalen Multicastverbreitungsadresse, die von mehreren Nomaden-Arbeitsplätzen kommen, die zum Ursprungsstandort gehören und jeder an einem getrennten Standort mit dem IP-Netz vernetzt sind, der Schritt e), der darin besteht, durch globale Multicastverbreitung die unter der zweiten Adresse zu verbreitenden Informationen zu übertragen, darin besteht, einen globalen Multicastverbreitungsbaum zu erzeugen, dessen Wurzelelement aus einem der Router besteht, die den diesen lokalen Multicastverbreitungsbaum bildenden Verbreitungszweigen gemeinsam sind.

6. Verfahren nach einem der Ansprüche 1 bis 5, **dadurch gekennzeichnet, dass**, wenn die zweite Adresse für eine lokale Multicast-Informationsverbreitung an der erste Adresse aufrechterhalten und validiert wird, der Schritt d), der darin besteht, die zu verbreitenden Informationen von der ersten zur zweiten Verbreitungsadresse zu übertragen, für jede erweiterte Multicastverbreitung-Anfragemeldung an dieser zweiten Adresse nach der ersten erweiterte Multicastverbreitung-Anfragemeldung an der zweiten Adresse unterdrückt wird.

7. System zur erweiterten Multicast-Informationsverbreitung ausgehend von einer lokalen Multicastverbreitung von einem Ursprungsstandort an einen Benutzer eines Nomaden-Arbeitsplatzes, der zu diesem Ursprungsstandort gehört, zu mindestens einem getrennten Standort, an dem dieser Nomaden-Arbeitsplatz sich befindet und der mit diesem Ursprungsstandort über ein IP-Netz verbunden ist, wobei die lokale Multicast-Informationsverbreitung von einer Informationsverbreitungsquelle erzeugt wird, die an einer ersten lokalen Multicastverbreitungsadresse an diesem Ursprungsstandort eingesetzt ist, **dadurch gekennzeichnet, dass** das System am Ursprungsstandort mindestens aufweist:
- ein Empfangsmittel einer erweiterte Multicast-Informationsverbreitung-Anfragemeldung, die von dem Nomaden-Arbeitsplatz ausgehend von dem getrennten Standort gesendet wird, wobei die Anfragemeldung mindestens die erste lokale Multicast-Informationsverbreitungsadresse und einen Identifikationscode des Nomaden-Arbeitsplatzes enthält, wobei die Empfangsmittel es ermöglichen, die Identifikation des Nomaden-Arbeitsplatzes am Ursprungsstandort zu gewährleisten;
- ein Mittel zur Übertragung einer Zugangsangebotsmeldung zu einer globalen Multicast-Informationsverbreitung vom Ursprungsstandort zum Nomaden-Arbeitsplatz, wobei die Zugangsangebotsmeldung mindestens eine zweite globale Multicast-Informationsverbreitungsadresse enthält, deren Verbreitungsquelle am Ursprungsstandort identifiziert wird;
- ein Empfangsmittel einer Annahmemeldung des Zugangsangebots zu den an der zweiten globalen Multicast-Informationsverbreitungsadresse verbreiteten Informationen, die vom Nomaden-Arbeitsplatz gesendet wird;
- ein Mittel zur Übertragung der zu verbreitenden Informationen von der ersten zur zweiten Verbreitungsadresse;
- ein Mittel zur Übertragung der unter der zweiten Adresse zu verbreitenden Informationen durch globale Multicast-Informationsverbreitung.

8. System nach Anspruch 7, **dadurch gekennzeichnet, dass** die Mittel zum Empfang einer erweiterte Multicastverbreitung-Anfragemeldung, zur Übertragung einer globale Multicastverbreitung-Zugangsangebotsmeldung vom Ursprungsstandort zum Nomaden-Arbeitsplatz, zum Empfang einer Annahmemeldung eines Zugangsangebots zu den an der zweiten globalen Multicastverbreitungsadresse verbreiteten Informationen, zur Übertragung der zu verbreitenden Informationen von der ersten zur zweiten Verbreitungsadresse, zur Übertragung der unter der zweiten Adresse zu verbreitenden Informationen durch globale Multicastverbreitung aus Software-Modulen bestehen.

9. System nach Anspruch 8, **dadurch gekennzeichnet, dass** die Software-Module in eine dedizierte Maschine eingesetzt sind, die im lokalen IP-Netz am Ursprungsstandort vernetzt ist.

10. System nach Anspruch 8, **dadurch gekennzeichnet, dass** der Ursprungsstandort einen Verbreitungsserver aufweist, der über einen Router mit dem IP-Netz verbunden ist, und dass die Software-Module in den Router eingesetzt sind.

11. Nomaden-Arbeitsplatz, der für die Anwendung des Verfahrens der erweiterten Multicast-Informationsverbreitung ausgehend von einer lokalen Multicast-Informationsverbreitung eines Ursprungsstandorts, zu dem dieser Nomaden-Arbeitsplatz gehört, zu mindestens einem getrennten Standort ausgestattet ist, an dem dieser Nomaden-Arbeitsplatz sich befindet und der mit diesem Ursprungsstandort über ein IP-Netz verbunden ist, wobei die lokale Multicast-Informationsverbreitung von einer Informationsverbreitungsquelle erzeugt wird, die an einer ersten lokalen Multicast-Informationsverbreitungsadresse in diesem Ursprungsstandort eingesetzt ist, **dadurch gekennzeichnet, dass** der Nomaden-Arbeitsplatz in einem Massespeicher gespeichert mindestens aufweist:
- einen Software-Modul zur Erzeugung und zur Übertragung einer Anfragemeldung der erweiterten Multicast-Informationsverbreitung, wobei diese Anfragemeldung mindestens eine erste lokale Multicast-Informationsverbreitungsadresse und einen Identifikationscode dieses Nomaden-Arbeitsplatzes enthält;
- einen Software-Modul zum Empfang und zum Lesen einer Zugangsangebotsmeldung zu einer globalen Multicast-Informationsverbreitung, wobei diese Zugangsangebotsmeldung mindestens eine zweite globale Multicast-Informationsverbreitungsadresse aufweist, deren Verbreitungsquelle im Ursprungsstandort identifiziert ist;
- einen Software-Modul zur Erzeugung und zur Übertragung zum Ursprungsstandort, über das IP-Netz, einer Annahmemeldung eines Zugangsangebots zu den an der zweiten globalen Multicast-Informationsverbreitungsadresse verbreiteten Informationen.

12. Softwareprodukt, das auf einem Speicherträger gespeichert ist, zur Anwendung, durch einen Computer vom Typ Nomaden-Arbeitsplatz, des Verfahrens der erweiterten Multicast-Informationsverbreitung ausgehend von einer lokalen Multicastverbreitung an einem Ursprungsstandort zu mindestens einem getrennten Standort, an dem dieser Nomaden-Arbeitsplatz sich befindet und der mit diesem Ursprungsstandort über ein IP-Netz verbunden ist, wobei die lokale Multicast-Informationsverbreitung von einer Informationsverbreitungsquelle erzeugt wird, die an einer ersten lokalen Multicast-Informationsverbreitungsadresse an diesem Ursprungsstandort eingesetzt ist, gemäß einem der Ansprüche 1 bis 6, **dadurch gekennzeichnet, dass** es zum Abruf am Nomaden-Arbeitsplatz aufweist:
- einen Software-Modul zur Erzeugung und zur Übertragung einer Anfragemeldung einer erweiterten IP-Multicast-Informationsverbreitung, wobei diese Anfragemeldung mindestens eine erste lokale Multicast-Informationsverbreitungsadresse und einen Informationscode dieses Nomaden-Arbeitsplatzes enthält;
- einen Software-Modul zum Empfang und zum Lesen einer Zugangsangebotsmeldung zu einer globalen Multicast-Informationsverbreitung, wobei diese Zugangsangebotsmeldung mindestens eine zweite globalen Multicast-Informationsverbreitungsadresse aufweist, deren Verbreitungsquelle am Ursprungsstandort identifiziert wird;
- einen Software-Modul zur Erzeugung und zur Übertragung einer Annahmemeldung des Zugangsangebots zu den an der zweiten globalen Multicast-Informationsverbreitungsadresse verbreiteten Informationen über das IP-Netz zum Ursprungsstandort,
wenn das Softwareprodukt im Computer angewendet wird.

13. Softwareprodukt, das auf einem Speicherträger gespeichert ist, zur Anwendung, durch einen Computer vom Typ Nomaden-Arbeitsplatz, des Verfahrens der erweiterten Multicast-Informationsverbreitung ausgehend von einer lokalen Multicastverbreitung an einem Ursprungsstandort zu mindestens einem getrennten Standort, an dem dieser Nomaden-Arbeitsplatz sich befindet und der mit diesem Ursprungsstandort über ein IP-Netz verbunden ist, ausgehend von einer Informationsverbreitungsquelle, die an einer ersten lokalen Multicast-Informationsverbreitungsadresse an diesem Ursprungsstandort eingesetzt ist, gemäß einem der Ansprüche 1 bis 6, **dadurch gekennzeichnet, dass** es zum Abruf am Ursprungsstandort aufweist:
- einen Software-Modul zum Empfang einer Anfragemeldung einer erweiterten IP-Multicast-Informationsverbreitung, die vom Nomaden-Arbeitsplatz am getrennten Standort gesendet wird, wobei diese Anfragemeldung mindestens die erste lokale Multicast-Informationsverbreitungsadresse und einen Identifikationscode des Nomaden-Arbeitsplatzes enthält, wobei der Empfangs-Software-Modul es ermöglicht, die Identifikation des Nomaden-Arbeitsplatzes am getrennten Standort durch den Ursprungsstandort zu gewährleisten;
- einen Software-Modul zur Übertragung einer Zugangsangebotsmeldung zu einer globalen Multicast-Informationsverbreitung vom Ursprungsstandort zum Nomaden-Arbeitsplatz, wobei die Zugangsangebotsmeldung mindestens eine zweite globale Multicast-Informationsverbreitungsadresse aufweist, deren Verbreitungsquelle am Ursprungsstandort identifiziert wird;
- einen Software-Modul zum Empfang einer Annahmemeldung eines Zugangsangebots zu den Informationen, die an der zweiten globalen Multicast-Informationsverbreitungsadresse verbreitet werden, die vom Nomaden-Arbeitsplatz gesendet wird;
- einen Software-Modul zur Übertragung der zu verbreitenden Informationen von der ersten zur zweiten Verbreitungsadresse;
- einen Software-Modul zur Übertragung der unter der zweiten Adresse zu verbreitenden Informationen durch globale Multicast-Informationsverbreitung,
wenn das Softwareprodukt im Computer angewendet wird.

14. Softwareprodukt nach Anspruch 13, **dadurch gekennzeichnet, dass** für einen Ursprungsstandort, der einen Router aufweist, die Software-Module in einem Massespeicher des Routers gespeichert sind.

15. Datenstruktur, die für eine Anfragemeldung einer erweiterten Multicast-Informationsverbreitung repräsentativ ist, die im Rahmen eines Verfahrens der erweiterten Multicast-Informationsverbreitung ausgehend von einer lokalen Multicastverbreitung von einem Ursprungsstandort an einen Benutzer eines zu diesem Ursprungsstandort gehörenden Nomaden-Arbeitsplatzes ausgetauscht wird, zu mindestens einem getrennten Standort, an dem dieser Nomaden-Arbeitsplatz sich befindet und der mit diesem Ursprungsstandort über ein IP-Netz verbunden ist, wobei die lokale Multicast-Informationsverbreitung von einer Informationsverbreitungsquelle erzeugt wird, die an einer ersten lokalen Multicast-Informationsverbreitungsadresse an diesem Ursprungsstandort eingesetzt ist,
**dadurch gekennzeichnet, dass** die Anfragemeldung der erweiterten Multicast-Informationsverbreitung vom Nomaden-Arbeitsplatz an den Ursprungsstandort übertragen wird,
und dass die Datenstruktur mindestens aufweist:
- ein Vorspannfeld, das einen Identifikationscode der Anfragemeldung der erweiterten Multicast-Informationsverbreitung aufweist;
- ein Feld, das die erste lokale Multicast-Informationsverbreitungsadresse aufweist;
- ein Feld, das einen Identifikationscode des Nomaden-Arbeitsplatzes aufweist.

16. Datenstruktur, die für eine Zugangsangebotsmeldung zu einer globalen Multicast-Informationsverbreitung repräsentativ ist, die im Rahmen eines Verfahrens der erweiterten Multicast-Informationsverbreitung ausgehend von einer lokalen Multicastverbreitung an einem Ursprungsstandort an einen Benutzer eines zu diesem Ursprungsstandort gehörenden Nomaden-Arbeitsplatzes ausgetauscht wird, zu mindestens einem getrennten Standort, an dem dieser Nomaden-Arbeitsplatz sich befindet und der mit diesem Ursprungsstandort über das IP-Netz verbunden ist, wobei die lokale Multicast-Informationsverbreitung von einer Informationsverbreitungsquelle erzeugt wird, die an einer ersten lokalen Multicast-Informationsverbreitungsadresse in diesem Ursprungsstandort eingesetzt ist,
**dadurch gekennzeichnet, dass** die Zugangsangebotsmeldung zu einer globalen Multicast-Informationsverbreitung vom Ursprungsstandort zum Nomaden-Arbeitsplatz übertragen wird,
und dass die Datenstruktur mindestens aufweist:
- ein Vorspannfeld, das einen Zugangsangebotsmeldung-Identifikationscode aufweist;
- ein Feld, das eine zweite globale Multicast-Informationsverbreitungsadresse aufweist, unter der die Informationen verbreitet werden müssen, die unter der ersten lokalen Verbreitungsadresse verbreitet werden.

17. Datenstruktur, die für eine Annahmemeldung eines Zugangsangebots zu einer globalen Multicast-Informationsverbreitung repräsentativ ist, die im Rahmen eines Verfahrens der erweiterten Multicast-Informationsverbreitung ausgehend von einer lokalen Multicastverbreitung an einem Ursprungsstandort an einen Benutzer eines zu diesem Ursprungsstandort gehörenden Nomaden-Arbeitsplatzes ausgetauscht wird, zu mindestens einem getrennten Standort, an dem dieser Nomaden-Arbeitsplatz sich befindet und der mit diesem Ursprungsstandort über ein IP-Netz verbunden ist, wobei die lokale Multicast-Informationsverbreitung von einer Informationsverbreitungsquelle erzeugt wird, die an einer ersten lokalen Multicast-Informationsverbreitungsadresse an diesem Ursprungsstandort eingesetzt ist,
**dadurch gekennzeichnet, dass** die Annahmemeldung eines Zugangsangebots zu einer globalen Multicast-Informationsverbreitung vom Nomaden-Arbeitsplatz zum Ursprungsstandort übertragen wird,
und dass die Datenstruktur aufweist:
- ein Vorspannfeld, das einen Zugangsangebot-Annahmemeldung-Identifikationscode enthält;
- ein zweites Feld, das eine zweite globale Multicast-Informationsverbreitungsadresse aufweist, unter der die unter der ersten lokalen Verbreitungsadresse verbreiteten Informationen verbreitet werden müssen.
